# EUROPEAN PATENT APPLICATION

(11) **EP 4 797 748 A1**
(43) Date of publication of application: **26.08.2026**
(21) Application number: 24890485.6
(22) Date of filing: 29.10.2024
(51) Int. Cl.: H04W 8/24

(54) **COMMUNICATION METHOD, COMMUNICATION APPARATUS AND COMMUNICATION SYSTEM**

(30) Priority: 17.11.2023 CN 202311551818
(71) Applicant: HUAWEI TECHNOLOGIES CO., LTD., Shenzhen 518129 (CN)
(72) Inventor: HUANG, Su, Shenzhen, Guangdong 518129 (CN)
(74) Representative: Gill Jennings & Every LLP
(86) International application number: PCT/CN2024/127967
(87) International publication number: WO 2025/103128

(57) **Abstract**

This application relates to the field of wireless communication technologies, and in particular, to a communication method, a communication apparatus, and a communication system. The method includes: sending a first request message, where the first request message includes first motion status information of a terminal device; and receiving a first response message, where the first response message includes first information or second information, the first information indicates that the terminal device is associated with at least one sensing target, and the second indication information indicates that the terminal device is not associated with any sensing target. With the method, sensing precision of the sensing technology can be improved.

## Description

This application claims priority to Chinese Patent Application No. 202311551818.8, filed with the China National Intellectual Property Administration on November 17, 2023 and entitled "COMMUNICATION METHOD, COMMUNICATION APPARATUS, AND COMMUNICATION SYSTEM", which is incorporated herein by reference in its entirety.

### TECHNICAL FIELD

This application relates to the field of wireless communication technologies, and in particular, to a communication method, a communication apparatus, and a communication system.

### BACKGROUND

With the evolution of communication technologies, sensing capabilities emerge from communication frequency bands, especially the millimeter-wave frequency band. When network devices (for example, base stations) or terminal devices have such capabilities, the communication system may perform sensing and identification on specific objects to obtain their current statuses, for example, locations or speeds. The communication system may fulfill service requirements in many scenarios through such capabilities.

In the current sensing technology, a sensing function (sensing function, SF) network element is deployed in the core network of a communication system. The sensing function network element may use network devices and terminal devices to transmit sensing measurement signals and receive sensing measurement signals reflected by sensed objects, and then determine information, for example, locations, speeds, and shapes of the sensed objects based on signal parameters of the transmitted and received signals. For example, the SF network element may transmit measurement signals via base stations, receive sensing measurement signals reflected by on-road vehicles via the base stations, and obtain information of the on-road vehicles, for example, their locations and moving speeds. Because sensing results rely on the sensing measurement signals, this approach is susceptible to environment clutter, resulting in low sensing precision. Therefore, how to improve sensing precision has already become one of the technical problems to be resolved urgently.

### SUMMARY

To address these challenges, this application provides a communication method, a communication apparatus, and a communication system, which can reduce the impact of environment clutter and improve sensing precision.

The following describes this application from a plurality of aspects. It is easy to understand that implementations of the plurality of aspects may be mutually referenced.

According to a first aspect, an embodiment of this application provides a communication method. The method is applicable to a first device, and the method includes: sending a first request message to a third device, where the first request message includes first motion status information of a terminal device; and receiving a first response message from the third device, where the first response message includes first information or second information, the first information indicates that the terminal device is associated with at least one sensing target, and the second indication information indicates that the terminal device is not associated with any sensing target.

In the foregoing implementation, the first device sends, to the third device, the first request message that includes the first motion status information of the terminal device. The third device may feed back the first response message based on the first request message, and notify, by using the first information or the second information in the first response message, whether the terminal device has an associated sensing target. When the first device determines, based on the first response message, the at least one sensing target associated with the terminal device, when the first device senses the at least one sensing target by using a passive sensing technology, interference caused by environment clutter may be reduced with reference to a positioning result of the terminal device, to obtain a sensing result with higher precision. Therefore, according to the foregoing method, the impact of environment clutter on the sensing result can be effectively reduced, and sensing precision of the passive sensing technology can be improved.

According to a second aspect, an embodiment of this application provides a communication method. The method is applicable to a third device, and the method includes: receiving a first request message from a first device, where the first request message includes first motion status information of a terminal device; and sending a first response message to the first device, where the first response message includes first information or second information, the first information indicates that the terminal device is associated with at least one sensing target, and the second indication information indicates that the terminal device is not associated with any sensing target.

According to a third aspect, an embodiment of this application provides a communication method. The method is applicable to a second device, and the method includes: sending a second request message to a first device, where the second request message includes at least a device identifier of a terminal device; and receiving a first response message from the first device, where the first response message includes first information or second information, the first information indicates that the terminal device is associated with at least one sensing target, and the second indication information indicates that the terminal device is not associated with any sensing target.

According to a fourth aspect, an embodiment of this application provides a communication method. The method is applicable to a third device, and the method includes: receiving a first request message from a second device, where the first request message includes first motion status information of a terminal device; and sending a first response message to the second device, where the first response message includes first information or second information, the first information indicates that the terminal device is associated with at least one sensing target, and the second indication information indicates that the terminal device is not associated with any sensing target.

In the foregoing implementation, the second device sends, to the third device, the first request message that includes the first motion status information of the terminal device. The third device may feed back the first response message based on the first request message, and notify, by using the first information or the second information in the first response message, whether the terminal device has an associated sensing target. When the second device determines, based on the first response message, the at least one sensing target associated with the terminal device, when the second device senses the at least one sensing target by using a passive sensing technology, interference caused by environment clutter may be reduced with reference to a positioning result of the terminal device, to obtain a sensing result with higher precision. Therefore, according to the foregoing method, the impact of environment clutter on the sensing result can be effectively reduced, and sensing precision of the passive sensing technology can be improved.

According to a fifth aspect, an embodiment of this application provides a communication method. The method is applicable to a second device, and the method includes: sending a first request message to a third device, where the first request message includes first motion status information of a terminal device; and receiving a first response message from the third device, where the first response message includes first information or second information, the first information indicates that the terminal device is associated with at least one sensing target, and the second indication information indicates that the terminal device is not associated with any sensing target.

According to a sixth aspect, an embodiment of this application provides a communication method. The method is applicable to a fourth device, and the method includes: receiving a second request message from a second device, where the second request message includes at least a device identifier of a terminal device; and sending a first response message to the second device, where the first response message includes first information or second information, the first information indicates that the terminal device is associated with at least one sensing target, and the second indication information indicates that the terminal device is not associated with any sensing target.

In the foregoing implementation, the second device sends, to the fourth device, the second request message that includes the device identifier of the terminal device. The fourth device may feed back the first response message based on the second request message, and notify, by using the first information or the second information in the first response message, whether the terminal device has an associated sensing target. When the fourth device determines, based on the first response message, the at least one sensing target associated with the terminal device, when the fourth device senses the at least one sensing target by using a passive sensing technology, interference caused by environment clutter may be reduced with reference to a positioning result of the terminal device, to obtain a sensing result with higher precision. Therefore, according to the foregoing method, the impact of environment clutter on the sensing result can be effectively reduced, and sensing precision of the passive sensing technology can be improved.

According to a seventh aspect, an embodiment of this application provides a communication method. The method is applicable to a second device, and the method includes: sending a second request message to a fourth device, where the second request message includes at least a device identifier of a terminal device; and receiving a first response message from the fourth device, where the first response message includes first information or second information, the first information indicates that the terminal device is associated with at least one sensing target, and the second indication information indicates that the terminal device is not associated with any sensing target.

With reference to at least one of the first aspect to the seventh aspect, in a possible implementation, the first information includes identification information of a first target, and the first target includes the terminal device and the at least one sensing target.

With reference to at least one of the first aspect to the seventh aspect, in a possible implementation, the first response message includes the first information, the first response message further includes second motion status information, and the second motion status information corresponds to the terminal device and the at least one sensing target.

With reference to at least one of the first aspect to the seventh aspect, in a possible implementation, whether the terminal device is associated with a sensing target is determined based on motion status information of the terminal device and motion status information of the sensing target.

With reference to at least one of the first aspect to the seventh aspect, in a possible implementation, whether the terminal device is associated with a sensing target is determined based on location information of the terminal device and location information of the sensing target.

With reference to at least one of the first aspect to the seventh aspect, in a possible implementation, the sensing target is a passive object, and the passive object does not have a capability of receiving and sending an electromagnetic wave.

With reference to at least one of the first aspect to the seventh aspect, in a possible implementation, the motion status information includes at least one of location information and speed information, or the motion status information indicates at least one of location information and speed information. It should be understood that the first motion status information, the second motion status information, and the like in embodiments of this application belong to one of the motion status information described herein, and also meet the description of the motion status information herein.

With reference to at least one of the first aspect to the seventh aspect, in a possible implementation, whether the terminal device is associated with a sensing target is determined based on motion status information of the terminal device and motion status information of the sensing target.

With reference to at least one of the first aspect to the seventh aspect, in a possible implementation, whether the terminal device is associated with a sensing target is determined based on location information of the terminal device and location information of the sensing target.

With reference to at least one of the first aspect to the seventh aspect, in a possible implementation, a first distance between the terminal device and the sensing target in a first time period is less than or equal to a first length, and the terminal device is associated with the sensing target. The first distance is determined based on location information of the terminal device and location information of the sensing target in the first time period.

In this implementation, whether the terminal device is associated with the sensing target is determined based on a value of the first distance between the terminal device and the sensing target in the first time period. This solution is simple and easy to implement, and can not only improve a success rate of association between the terminal device and the sensing target, but also ensure accuracy and reliability of an association relationship between the terminal device and the sensing target. In this way, it can be ensured that a sensing result obtained based on the association relationship is more accurate and reliable.

Alternatively, a first displacement of the terminal device in a second time period is greater than or equal to a second length, a second displacement of the sensing target in a third time period is greater than or equal to a third length, and the terminal device is associated with the sensing target. The first displacement is determined based on location information of the terminal device in the second time period, and the second displacement is determined based on location information of the sensing target in the third time period.

In this implementation, whether the terminal device is associated with the sensing target is determined based on a value of the displacement of the terminal device in the second time period and a value of the displacement of the sensing target in the third time period. This solution is simple and reliable, can ensure accuracy and reliability of an association relationship between the terminal device and the sensing target, and can ensure higher precision of a sensing result obtained based on the association relationship.

With reference to at least one of the first aspect, the second aspect, the fourth aspect, and the fifth aspect, in a possible implementation, the first request message includes at least one of time period indication information and length indication information. The time period indication information indicates at least one of the first time period, the second time period, and the third time period, and the length indication information indicates at least one of the first length, the second length, and the third length.

With reference to at least one of the third aspect, the sixth aspect, and the seventh aspect, in a possible implementation, the second request message includes at least one of time period indication information and length indication information. The time period indication information indicates at least one of the first time period, the second time period, and the third time period, and the length indication information indicates at least one of the first length, the second length, and the third length.

With reference to at least one of the first aspect to the seventh aspect, in a possible implementation, whether the terminal device is associated with a sensing target is determined based on the location information of the terminal device, the location information of the sensing target, and location information of a first reference location.

With reference to at least one of the first aspect to the seventh aspect, in a possible implementation, a direction deviation of the terminal device and the sensing target relative to the first reference location in a fourth time period is less than or equal to an angle threshold, and the terminal device is associated with the sensing target, where the direction deviation is determined based on the location information of the terminal device, the location information of the sensing target, and the location information of the first reference location.

In the foregoing implementation, whether the terminal device is associated with the sensing target is determined based on the direction deviation of the terminal device and the sensing target relative to the first reference location. This can not only improve a success rate of association between the terminal device and the sensing target, but also ensure accuracy and reliability of an association relationship between the terminal device and the sensing target. In this way, it can be ensured that a sensing result obtained based on the association relationship is more accurate and reliable.

Alternatively, a distance difference of the terminal device and the sensing target relative to the second reference location in a fifth time period is less than or equal to a fourth length, and the terminal device is associated with the sensing target, where the distance difference is determined based on the location information of the terminal device, the location information of the sensing target, and the location information of the second reference location.

In the foregoing implementation, whether the terminal device is associated with the sensing target is determined based on the distance difference of the terminal device and the sensing target relative to the second reference location. This solution is simple and easy to implement, and can improve a success rate of association between the terminal device and the sensing target, thereby improving sensing efficiency.

With reference to at least one of the first aspect, the second aspect, the fourth aspect, and the fifth aspect, in a possible implementation, first request information includes at least one of time period indication information, angle threshold indication information, length indication information, and reference location indication information. The time period indication information indicates at least one of the fourth time period and the fifth time period, the angle threshold indication information indicates the angle threshold, the length indication information indicates the fourth length, and the reference location indication information indicates at least one of the location information of the first reference location and the location information of the second reference location.

With reference to at least one of the third aspect, the sixth aspect, and the seventh aspect, in a possible implementation, the second request message includes at least one of time period indication information, angle threshold indication information, length indication information, and reference location indication information. The time period indication information indicates at least one of the fourth time period and the fifth time period, the angle threshold indication information indicates the angle threshold, the length indication information indicates the fourth length, and the reference location indication information indicates at least one of the location information of the first reference location and the location information of the second reference location.

With reference to at least one of the first aspect to the seventh aspect, in a possible implementation, whether the terminal device is associated with a sensing target is determined based on speed information of the terminal device and speed information of the sensing target.

With reference to at least one of the first aspect to the seventh aspect, in a possible implementation, in a sixth time period, a speed difference between the terminal device and the sensing target is less than or equal to a speed difference threshold, and the terminal device is associated with the sensing target. The speed difference between the terminal device and the sensing target is determined based on the speed information of the terminal device and the speed information of the sensing target.

With reference to at least one of the first aspect to the seventh aspect, in a possible implementation, the speed difference between the terminal device and the sensing target includes a modulus value of a speed vector difference between the terminal device and the sensing target. Alternatively, the speed difference between the terminal device and the sensing target includes a modulus value of a speed vector component difference between the terminal device and the sensing target in a same direction.

In the foregoing implementation, whether the terminal device is associated with the sensing target is determined based on a value of the speed deviation between the terminal device and the sensing target. This solution is simple and easy to implement, and can not only improve a success rate of association between the terminal device and the sensing target, but also ensure accuracy and reliability of an association relationship between the terminal device and the sensing target. In this way, it can be ensured that a sensing result obtained based on the association relationship is more accurate and reliable.

With reference to at least one of the first aspect, the second aspect, the fourth aspect, and the fifth aspect, in a possible implementation, first request information includes at least one of time period indication information and speed difference threshold indication information. The time period indication information indicates the sixth time period, and the speed difference threshold indication information indicates the speed difference threshold.

With reference to at least one of the third aspect, the sixth aspect, and the seventh aspect, in a possible implementation, the second request message includes at least one of time period indication information and speed difference threshold indication information. The time period indication information indicates the sixth time period, and the speed difference threshold indication information indicates the speed difference threshold.

With reference to the first aspect, in a possible implementation, the method further includes: receiving a second request message from a second device, where the second request message includes at least a device identifier of the terminal device.

With reference to the first aspect, in a possible implementation, the method further includes: sending a second response message to the second device, where the second response message includes the first information or the second information.

It should be understood that the communication methods provided in the second aspect and the third aspect are used to cooperate with the communication method provided in the first aspect, and therefore can achieve same beneficial effect. To avoid repetition, details are not described again.

It should be understood that the communication method provided in the fifth aspect is used to cooperate with the communication method provided in the fourth aspect, and therefore can achieve same beneficial effect. To avoid repetition, details are not described again.

It should be understood that the communication method provided in the seventh aspect is used to cooperate with the communication method provided in the sixth aspect, and therefore can achieve same beneficial effect. To avoid repetition, details are not described again.

It should be understood that the communication method provided in the first aspect is further applicable to a functional component in the first device, for example, a processor, a chip, a chip system, or a circuit in the first device. This is not limited in this application. Similarly, the communication methods provided in the second aspect to the sixth method are also applicable to corresponding functional components in devices. To avoid redundancy, details are not described herein again.

According to an eighth aspect, this application provides a communication apparatus. The communication apparatus may be the first device mentioned in the first aspect. The communication apparatus includes a transceiver unit and a processing unit. The processing unit is configured to generate a first request message. The first request message includes first motion status information of a terminal device. The transceiver unit is configured to send the first request message to a third device. The transceiver unit is further configured to receive a first response message from the third device. The first response message includes first information or second information, the first information indicates that the terminal device is associated with at least one sensing target, and the second indication information indicates that the terminal device is not associated with any sensing target.

According to a ninth aspect, this application provides a communication apparatus. The communication apparatus may be the third device mentioned in the second aspect. The communication apparatus includes a transceiver unit and a processing unit. The transceiver unit is configured to receive a first request message from a first device, where the first request message includes first motion status information of a terminal device. The processing unit is configured to generate a first response message. The transceiver unit is configured to send the first response message to the first device, where the first response message includes first information or second information, the first information indicates that the terminal device is associated with at least one sensing target, and the second indication information indicates that the terminal device is not associated with any sensing target.

According to a tenth aspect, this application provides a communication apparatus. The communication apparatus may be the second device mentioned in the third aspect. The communication apparatus includes a transceiver unit and a processing unit. The processing unit is configured to generate a second request message. The transceiver unit is configured to send the second request message to a first device, where the second request message includes at least a device identifier of a terminal device. The transceiver unit is further configured to receive a first response message from the first device, where the first response message includes first information or second information, the first information indicates that the terminal device is associated with at least one sensing target, and the second indication information indicates that the terminal device is not associated with any sensing target.

According to an eleventh aspect, this application provides a communication apparatus. The communication apparatus may be the third device mentioned in the fourth aspect. The communication apparatus includes a transceiver unit and a processing unit. The transceiver unit is configured to receive a first request message from a second device, where the first request message includes first motion status information of a terminal device. The processing unit is configured to generate a second response message. The transceiver unit is configured to send a first response message to the second device. The first response message includes first information or second information, the first information indicates that the terminal device is associated with at least one sensing target, and the second indication information indicates that the terminal device is not associated with any sensing target.

According to a twelfth aspect, this application provides a communication apparatus. The communication apparatus may be the second device mentioned in the fifth aspect. The communication apparatus includes a transceiver unit and a processing unit. The processing unit is configured to generate a first request message. The transceiver unit is configured to send the first request message to a third device, where the first request message includes first motion status information of a terminal device. The transceiver unit is further configured to receive a first response message from the third device. The first response message includes first information or second information, the first information indicates that the terminal device is associated with at least one sensing target, and the second indication information indicates that the terminal device is not associated with any sensing target.

According to a thirteenth aspect, this application provides a communication apparatus. The communication apparatus may be the fourth device mentioned in the sixth aspect. The communication apparatus includes a transceiver unit and a processing unit. The transceiver unit is configured to receive a second request message from a second device, where the second request message includes at least a device identifier of a terminal device. The processing unit is configured to generate a first response message. The transceiver unit is configured to send the first response message to the second device. The first response message includes first information or second information, the first information indicates that the terminal device is associated with at least one sensing target, and the second indication information indicates that the terminal device is not associated with any sensing target.

According to a fourteenth aspect, this application provides a communication apparatus. The communication apparatus may be the second device mentioned in the seventh aspect. The communication apparatus includes a transceiver unit and a processing unit. The processing unit is configured to generate a second request message. The transceiver unit is configured to send the second request message to a fourth device. The second request message includes at least a device identifier of a terminal device. The transceiver unit is further configured to receive a first response message from the fourth device. The first response message includes first information or second information, the first information indicates that the terminal device is associated with at least one sensing target, and the second indication information indicates that the terminal device is not associated with any sensing target.

With reference to at least one of the eighth aspect to the fourteenth aspect, in a possible implementation, the first information includes identification information of a first target, and the first target includes the terminal device and the at least one sensing target.

With reference to at least one of the eighth aspect to the fourteenth aspect, in a possible implementation, the first response message includes the first information, the first response message further includes second motion status information, and the second motion status information corresponds to the terminal device and the at least one sensing target.

With reference to at least one of the eighth aspect to the fourteenth aspect, in a possible implementation, whether the terminal device is associated with a sensing target is determined based on motion status information of the terminal device and motion status information of the sensing target.

With reference to at least one of the eighth aspect to the fourteenth aspect, in a possible implementation, whether the terminal device is associated with a sensing target is determined based on location information of the terminal device and location information of the sensing target.

With reference to at least one of the eighth aspect to the fourteenth aspect, in a possible implementation, the sensing target is a passive object, and the passive object does not have a capability of receiving and sending an electromagnetic wave.

With reference to at least one of the eighth aspect to the fourteenth aspect, in a possible implementation, the motion status information includes at least one of location information and speed information, or the motion status information indicates at least one of location information and speed information. It should be understood that the first motion status information, the second motion status information, and the like in embodiments of this application belong to one of the motion status information described herein, and also meet the description of the motion status information herein.

With reference to at least one of the eighth aspect to the fourteenth aspect, in a possible implementation, whether the terminal device is associated with a sensing target is determined based on motion status information of the terminal device and motion status information of the sensing target.

With reference to at least one of the eighth aspect to the fourteenth aspect, in a possible implementation, whether the terminal device is associated with a sensing target is determined based on location information of the terminal device and location information of the sensing target.

With reference to at least one of the eighth aspect to the fourteenth aspect, in a possible implementation, a first distance between the terminal device and the sensing target in a first time period is less than or equal to a first length, and the terminal device is associated with the sensing target. The first distance is determined based on location information of the terminal device and location information of the sensing target in the first time period.

Alternatively, a first displacement of the terminal device in a second time period is greater than or equal to a second length, a second displacement of the sensing target in a third time period is greater than or equal to a third length, and the terminal device is associated with the sensing target. The first displacement is determined based on location information of the terminal device in the second time period, and the second displacement is determined based on location information of the sensing target in the third time period.

With reference to at least one of the eighth aspect, the ninth aspect, the eleventh aspect, and the twelfth aspect, in a possible implementation, the first request message includes at least one of time period indication information and length indication information. The time period indication information indicates at least one of the first time period, the second time period, and the third time period, and the length indication information indicates at least one of the first length, the second length, and the third length.

With reference to at least one of the tenth aspect, the thirteenth aspect, and the fourteenth aspect, in a possible implementation, the second request message includes at least one of time period indication information and length indication information. The time period indication information indicates at least one of the first time period, the second time period, and the third time period, and the length indication information indicates at least one of the first length, the second length, and the third length.

With reference to at least one of the eighth aspect to the fourteenth aspect, in a possible implementation, whether the terminal device is associated with a sensing target is determined based on the location information of the terminal device, the location information of the sensing target, and location information of a first reference location.

With reference to at least one of the eighth aspect to the fourteenth aspect, in a possible implementation, a direction deviation of the terminal device and the sensing target relative to the first reference location in a fourth time period is less than or equal to an angle threshold, and the terminal device is associated with the sensing target, where the direction deviation is determined based on the location information of the terminal device, the location information of the sensing target, and the location information of the first reference location.

Alternatively, a distance difference of the terminal device and the sensing target relative to the second reference location in a fifth time period is less than or equal to a fourth length, and the terminal device is associated with the sensing target, where the distance difference is determined based on the location information of the terminal device, the location information of the sensing target, and the location information of the second reference location.

With reference to at least one of the eighth aspect, the ninth aspect, the eleventh aspect, and the twelfth aspect, in a possible implementation, first request information includes at least one of time period indication information, angle threshold indication information, length indication information, and reference location indication information. The time period indication information indicates at least one of the fourth time period and the fifth time period, the angle threshold indication information indicates the angle threshold, the length indication information indicates the fourth length, and the reference location indication information indicates at least one of the location information of the first reference location and the location information of the second reference location.

With reference to at least one of the tenth aspect, the thirteenth aspect, and the fourteenth aspect, in a possible implementation, the second request message includes at least one of time period indication information, angle threshold indication information, length indication information, and reference location indication information. The time period indication information indicates at least one of the fourth time period and the fifth time period, the angle threshold indication information indicates the angle threshold, the length indication information indicates the fourth length, and the reference location indication information indicates at least one of the location information of the first reference location and the location information of the second reference location.

With reference to at least one of the eighth aspect to the fourteenth aspect, in a possible implementation, whether the terminal device is associated with a sensing target is determined based on speed information of the terminal device and speed information of the sensing target.

With reference to at least one of the eighth aspect to the fourteenth aspect, in a possible implementation, in a sixth time period, a speed difference between the terminal device and the sensing target is less than or equal to a speed difference threshold, and the terminal device is associated with the sensing target. The speed difference between the terminal device and the sensing target is determined based on the speed information of the terminal device and the speed information of the sensing target.

With reference to at least one of the eighth aspect to the fourteenth aspect, in a possible implementation, the speed difference between the terminal device and the sensing target includes a modulus value of a speed vector difference between the terminal device and the sensing target. Alternatively, the speed difference between the terminal device and the sensing target includes a modulus value of a speed vector component difference between the terminal device and the sensing target in a same direction.

With reference to at least one of the eighth aspect, the ninth aspect, the eleventh aspect, and the twelfth aspect, in a possible implementation, first request information includes at least one of time period indication information and speed difference threshold indication information. The time period indication information indicates the sixth time period, and the speed difference threshold indication information indicates the speed difference threshold.

With reference to at least one of the tenth aspect, the thirteenth aspect, and the fourteenth aspect, in a possible implementation, the second request message includes at least one of time period indication information and speed difference threshold indication information. The time period indication information indicates the sixth time period, and the speed difference threshold indication information indicates the speed difference threshold.

With reference to the eighth aspect, in a possible implementation, the transceiver unit is further configured to receive a second request message from a second device, where the second request message includes at least a device identifier of the terminal device.

With reference to the eighth aspect, in a possible implementation, the transceiver unit is further configured to send a second response message to the second device, where the second response message includes the first information or the second information.

According to a fifteenth aspect, this application provides a computer program product. The computer program product includes instructions, and when the instructions are run on a computer, the computer performs the method in any one of the first aspect or the possible implementations of the first aspect, or performs the method in any one of the second aspect or the possible implementations of the second aspect, or performs the method in any one of the third aspect or the possible implementations of the third aspect, or performs the method in any one of the fourth aspect or the possible implementations of the fourth aspect, or performs the method in any one of the fifth aspect or the possible implementations of the fifth aspect, or performs the method in any one of the sixth aspect or the possible implementations of the sixth aspect, or performs the method in any one of the seventh aspect or the possible implementations of the seventh aspect.

According to a sixteenth aspect, this application provides a computer-readable storage medium. The computer-readable storage medium stores a computer program, and when the computer program is executed, the method in any one of the first aspect or the possible implementations of the first aspect is performed, or the method in any one of the second aspect or the possible implementations of the second aspect is performed, or the method in any one of the third aspect or the possible implementations of the third aspect is performed, or the method in any one of the fourth aspect or the possible implementations of the fourth aspect is performed, or the method in any one of the fifth aspect or the possible implementations of the fifth aspect is performed, or the method in any one of the sixth aspect or the possible implementations of the sixth aspect is performed, or the method in any one of the seventh aspect or the possible implementations of the seventh aspect is performed.

According to a seventeenth aspect, this application provides a communication apparatus, including at least one processor and a memory. The memory is configured to store a computer program. The processor is configured to execute the computer program stored in the memory, so that the communication apparatus performs the method in any one of the first aspect or the possible implementations of the first aspect, or performs the method in any one of the second aspect or the possible implementations of the second aspect, or performs the method in any one of the third aspect or the possible implementations of the third aspect, or performs the method in any one of the fourth aspect or the possible implementations of the fourth aspect, or performs the method in any one of the fifth aspect or the possible implementations of the fifth aspect, or performs the method in any one of the sixth aspect or the possible implementations of the sixth aspect, or performs the method in any one of the seventh aspect or the possible implementations of the seventh aspect.

According to an eighteenth aspect, this application provides a chip. The chip includes at least a processor. The processor is configured to execute computer-executable instructions, so that an apparatus in which the chip is installed performs the method in any one of the first aspect or the possible implementations of the first aspect, or performs the method in any one of the second aspect or the possible implementations of the second aspect, or performs the method in any one of the third aspect or the possible implementations of the third aspect, or performs the method in any one of the fourth aspect or the possible implementations of the fourth aspect, or performs the method in any one of the fifth aspect or the possible implementations of the fifth aspect, or performs the method in any one of the sixth aspect or the possible implementations of the sixth aspect, or performs the method in any one of the seventh aspect or the possible implementations of the seventh aspect.

With reference to the eighteenth aspect, in a possible implementation, the chip may further include an interface circuit. The interface circuit is configured to receive the computer-executable instructions and transmit the computer-executable instructions to the processor.

According to a nineteenth aspect, this application provides a communication system. The communication system includes at least a first device, a second device, and a third device. The first device is configured to perform the communication method provided in any one of the first aspect or the possible implementations of the first aspect, the second device is configured to perform the communication method provided in any one of the third aspect or the possible implementations of the third aspect, and the third device is configured to perform the communication method provided in any one of the second aspect or the possible implementations of the second aspect.

According to a twentieth aspect, this application provides a communication system. The communication system includes at least a second device and a third device. The second device is configured to perform the communication method provided in any one of the fifth aspect or the possible implementations of the fifth aspect, and the third device performs the communication method provided in any one of the fourth aspect or the possible implementations of the fourth aspect.

According to a twenty-first aspect, this application provides a communication system. The communication system includes at least a second device and a fourth device. The second device is configured to perform the communication method provided in any one of the seventh aspect or the possible implementations of the seventh aspect, and the fourth device is configured to perform the communication method provided in any one of the sixth aspect or the possible implementations of the sixth aspect.

In conclusion, the communication method provided in this application can effectively reduce the impact of environment clutter on sensing results, and can effectively improve sensing precision of a passive sensing technology.

### BRIEF DESCRIPTION OF DRAWINGS

FIG. 1a is a diagram of a structure of a communication system according to this application;
FIG. 1b is a diagram of a structure of still another communication system according to this application;
FIG. 1c is a diagram of a structure of still another communication system according to this application;
FIG. 2 is a schematic flowchart of a communication method according to this application;
FIG. 3 is still another schematic flowchart of a communication method according to this application;
FIG. 4 is a schematic flowchart of still another communication method according to this application;
FIG. 5 is a schematic flowchart of still another communication method according to this application;
FIG. 6 is a diagram of a structure of a communication apparatus according to this application; and
FIG. 7 is a diagram of a structure of still another communication apparatus according to this application.

### DESCRIPTION OF EMBODIMENTS

The following clearly and completely describes technical solutions in embodiments of this application with reference to accompanying drawings in embodiments of this application.

In this application, at least one means one or more, and a plurality of means two or more. "And/Or" describes an association relationship between associated objects and indicates that three relationships may exist. For example, A and/or B may indicate the following three cases: Only A exists, both A and B exist, and only B exists, where A and B may be singular or plural. In the text descriptions of this application, the character "/" represents an "or" relationship between the associated objects. In a formula in this application, the character "/" represents a "division" relationship between the associated objects. "Including at least one of A, B, and C" may represent: including A; including B; including C; including A and B; including A and C; including B and C; and including A, B, and C.

The technical solutions provided in embodiments of this application may be applied to various communication systems, for example, a long term evolution (Long Term Evolution, LTE) system, an LTE frequency division duplex (frequency division duplex, FDD) system, an LTE time division duplex (time division duplex, TDD) system, a universal mobile telecommunications system (Universal Mobile Telecommunications System, UMTS), a worldwide interoperability for microwave access (Worldwide Interoperability for Microwave Access, WiMAX) communication system, a 5th generation (5th generation, 5G) system, or a new radio (new radio, NR) system. In addition, the technical solutions may be further applicable to a subsequent evolved system, for example, a 6th generation 6G communication system, or even a 7th generation 7G communication system.

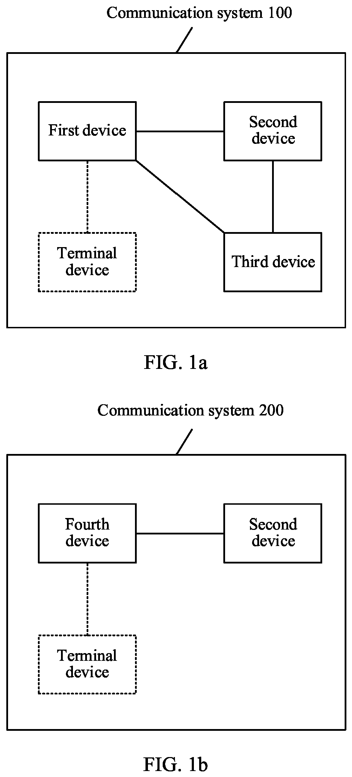

FIG. 1a is a diagram of a structure of a communication system according to this application. As shown in FIG. 1a, a communication system 100 may include a first device, a second device, and a third device. The first device, the second device, and the third device cooperate with each other, and may be configured to implement the communication method provided in this application.

The first device may be configured to initiate a positioning procedure, obtain related information such as a location, a speed, and an acceleration of a terminal device, and return the information to a related device or network element. The first device may be a specific apparatus, network element, or functional entity. In other words, the first device is an apparatus, a network element, or a functional entity that can provide a positioning function for the terminal device. It should be understood that the network element may also be referred to as an entity, a device, an apparatus, a module, or the like. This is not specifically limited in this application. In some possible implementations, the first device may be a location computation function (location management function, LMF) network element in a 5G network architecture. It should be understood that, in a future communication system, the first device may still be an LMF network element, or the first device may be another network element, or the first device may have another name. This is not limited in this application. It should be understood that a specific type of the first device is not limited in this application.

The second device is a demander of motion status information of a terminal device and a related sensed object, and the second device may directly communicate with a network function in a mobile communication network in which the first device and the third device are located. In some possible implementations, the second device may be an application-party server, a terminal device, an access network device, a core network device, or the like on which a positioning client (namely, a client) is loaded. It should be understood that a specific type of the second device is not limited in this application. It should be understood that the access network device may be a device configured to communicate with a terminal device, may be a base station, an access point, or a network device, or may be a device that communicates with a wireless terminal over an air interface in an access network by using one or more sectors.

The third device may be configured to obtain information such as a location and a speed of a sensed object by using a sensing capability. In other words, the third device is an apparatus, a network element, or a functional entity that provides a sensing function. In some possible implementations, the third device may be a sensing function (sensing function, SF) network element in a 5G network architecture. It should be understood that, in a future communication system, the third device may still be an SF network element, or the third device may be another network element having a sensing function, or the third device may have another name. This is not limited in this application. It should be understood that a specific type of the third device is not limited in this application.

Optionally, the communication system 100 may further include a terminal device. The terminal device may cooperate with the first device, the second device, and the third device to implement the communication method provided in this application. The terminal device may also be referred to as user equipment (user equipment, UE), a mobile station (mobile station, MS), a mobile terminal (mobile terminal, MT), an access terminal, a subscriber unit, a subscriber station, a mobile station, a mobile console, a remote station, a remote terminal, a mobile device, a user terminal, a terminal, a wireless communication device, a user agent, a user apparatus, or the like. The terminal device may be a device that provides voice/data connectivity for a user, for example, a handheld device or a vehicle-mounted device with a wireless connection function. Currently, examples of some terminals are as follows: a mobile phone (mobile phone), a tablet computer, a notebook computer, a handheld computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self driving (self driving), a wireless terminal in remote medical surgery (remote medical surgery), a wireless terminal in smart grid (smart grid), a wireless terminal in transportation safety (transportation safety), a wireless terminal in a smart city (smart city), a wireless terminal in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device or another processing device connected to a wireless modem, a vehicle-mounted device, a wearable device, a terminal device in a 5G network, a terminal device in a future evolved public land mobile network (public land mobile network, PLMN), and the like. This is not limited in embodiments of this application.

FIG. 1b is a diagram of a structure of still another communication system according to this application. As shown in FIG. 1b, a communication system 200 may include a second device and a fourth device.

The fourth device may be an apparatus, a network element, or a functional entity that has both a positioning function and a sensing function, and may be deployed on an access network side, or may be deployed on a core network side. In some possible implementations, the fourth device may be a location and sensing unit (location and sensing unit, LSU) that is deployed on an access network side and that provides wireless services such as positioning and sensing. It should be understood that, in a future communication system, the fourth device may be another network element having a sensing function, or the fourth device may have another name. This is not limited in this application.

Optionally, the communication system 100 may further include a terminal device. The terminal device may cooperate with the second device and the fourth device, to implement a communication method provided in this application.

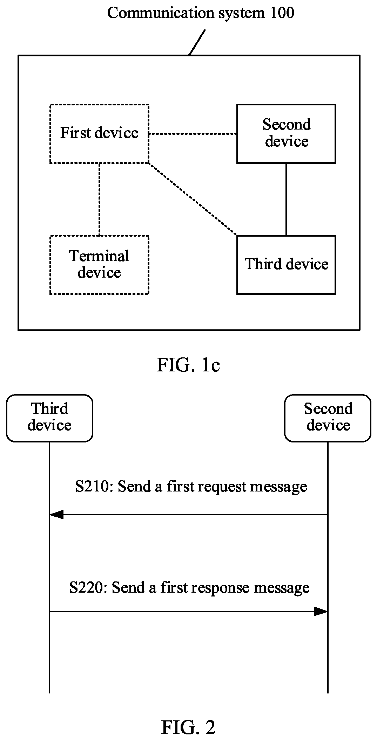

FIG. 1c is a diagram of a structure of still another communication system according to this application. As shown in FIG. 1c, a communication system 100 may include a second device and a third device. The second device may cooperate with the fourth device, to implement a communication method provided in this application.

Optionally, the communication system 100 may further include a terminal device and a first device. The terminal device may cooperate with the first device, the second device, and the third device, to implement the communication method provided in this application.

It should be understood that a network architecture and a service scenario that are described in embodiments of this application are used to describe the technical solutions in this application more clearly, and do not constitute a limitation on the technical solutions provided in this application. A person of ordinary skill in the art may learn that, with evolution of the network architecture and emergence of a new service scenario, the technical solutions provided in this application are also applicable to similar technical problems.

For ease of understanding solutions of this application, the following describes some nouns or terms in this application.

### 1. Active positioning technology

The active positioning technology is a technology in which information such as a location and a speed of a to-be-positioned object is obtained by using a signal received and sent by the to-be-positioned object.

It mainly uses an architecture in which a core network element performs control, and an access network device and a terminal device perform assistance. A downlink active positioning procedure is used as an example. The core network element mainly completes the following operations: (1) exchanging cell information with the access network device, for example, obtaining configuration information of a positioning reference signal (positioning reference signal, PRS), configuration information of a sounding reference signal (sounding reference signal, SRS), cell timing information, and cell location information; (2) transferring terminal device capability information, assistance information, measurement information, and the like with the terminal device; and (3) transferring measurement information and the like with the access network device. Correspondingly, the terminal device and the access network device assist the core network element in completing the foregoing operations. In actual implementation, the core network element may determine information such as a location and a speed of the terminal device based on cell information, measurement reporting performed by the terminal device on a downlink signal of each cell, and measurement reporting performed in each cell on an uplink signal of the terminal device.

It should be noted that the active positioning procedure may be initiated by the terminal device or the core network element, or may be indirectly initiated by a gateway mobile location center (gateway mobile location center, GMLC). This is not limited in this application. The core network element may be specifically an LMF network element.

For example, the active positioning procedure may be as follows.

S1: A location service client sends a location service request (location service request) to an AMF. Specifically, when the location service request is initiated by the client, the location service request is sent to a GMLC, and the GMLC sends the location service request to the AMF.

S2: The AMF initiates a location service request. For example, a network side needs to initiate an emergency call to UE. When the AMF initiates positioning, a next step is directly performed.

S3: The UE sends a location service request to the AMF. Specifically, the UE may request a location service from the AMF through NAS signaling.

S4: The AMF sends a location service request to an LMF.

S5: Perform positioning-related exchanges with a gNB in which the UE is located. Specifically, if the LMF determines that the gNB needs to participate in positioning, the LMF performs positioning-related exchanges with the serving gNB in which the target UE is located, to obtain a positioning measurement amount or assistance data.

S6: Perform positioning-related exchanges with the UE. Specifically, if determining that the UE needs to participate in positioning, the LMF performs positioning-related exchanges with the UE through a non-access stratum (non-access stratum, NAS) message, for example, obtains location information, and obtains positioning measurement or assistance data.

S7: The LMF returns a location service response (location service response) to the AMF. The location service response includes a positioning result.

S8: The AMF sends a location service response to the location service client. Specifically, if the location service request is initiated by the location service client, the AMF transfers the positioning result to the GMLC, and then the GMLC sends the location information to the service client that initiates the location request.

S9: The AMF obtains a location service response. Specifically, if the location request is initiated by the AMF, the AMF provides positioning data for a location request service in the AMF.

S10: The AMF sends a location service response to the UE. Specifically, if the location request is initiated by the UE, the AMF returns the positioning result to the UE.

In this application, the active positioning technology is mainly a positioning technology provided by the LTE and the 3rd generation partnership project (3rd generation partnership project, 3GPP). The 3GPP protocol defines a plurality of positioning technologies, including cell ID positioning supported by the LTE, enhanced cell ID (enhanced cell ID, E-CID) positioning, assisted GPS (assisted GPS, A-GPS) positioning, and a time difference of arrival (observed time difference of arrival, OTDOA) positioning technology. 5G introduces some new positioning technologies, such as NR ECID positioning, uplink time difference of arrival (UL time difference of arrival, UL-TDOA) positioning, DL-TDOA positioning, signal strength-based positioning, uplink angle of arrival (UL angle of arrival, UL-AoA) positioning, DL-AoA positioning, multi-round trip time (multi-round trip time, Multi-RTT) positioning, and another positioning technology.

For example, a TDOA positioning principle is to determine a location of the terminal device based on intersection points of two hyperbolas. A distance difference between every two transmission receive points (transmission receive points, TRPs) may be obtained based on a propagation speed of an electromagnetic wave and a time difference of arrival between the every two TRPs and the terminal device. In this case, the terminal device is definitely located on a hyperbola that uses the two TRPs as focuses and whose distance differences between the terminal device and the two focuses are specific values. Two hyperbolas can be obtained based on distance differences between the two pairs of TRPs and the terminal device. Information such as a location and a speed of the UE may be determined based on intersection points of the two hyperbolas. Specifically, in UL-TDOA positioning, the terminal device sends an uplink SRS, and a plurality of TRPs receive the uplink SRS sent by the terminal device, and send a propagation delay (time of arrival, TOA) of the SRS to the LMF. The LMF calculates, based on TDOA between every two TRPs and a known TRP location, a location, a speed, and the like of the terminal device according to a geometric algorithm. In DL-TDOA positioning, the TRP sends a PRS to the terminal device. The terminal device performs downlink reference signal time difference (reference signal time difference, RSTD) measurement on a PRS delivered by each TRP, and then reports a measurement result of the DL RSTD to the LMF. The LMF calculates a specific location, a speed, and the like of the terminal device based on a known TRP location and an RSTD measurement result.

It should be understood that the active positioning technology in this application includes but is not limited to the positioning technology described above. A person of ordinary skill in the art may learn that, with evolution of a network architecture and a communication technology, a new similar positioning technology may also be used as one of the active positioning technologies provided in this application.

### 2. Passive sensing technology

The passive sensing technology is a technology in which information such as a location and a speed of a to-be-sensed object is obtained by using a signal reflected by the to-be-sensed object. A sensing function (sensing function, SF) network element is deployed in a core network part in a communication system. The sensing function network element may use a network device and a terminal device to send a sensing measurement signal and receive a sensing measurement signal reflected by a sensed object, and then determine information, for example, a location, a speed, and a form of the sensed object based on a signal parameter for sending the sensing measurement signal and a signal parameter for receiving the sensing measurement signal reflected by the sensed object. For example, the SF network element may send a sensing measurement signal via a base station, receive, via the base station, a sensing measurement signal reflected by a vehicle that is traveling on a road, and obtain information, for example, a location and a moving speed of the vehicle based on the sent sensing measurement signal and the reflected sensing measurement signal. It should be understood that a specific implementation process of the passive sensing technology is not limited in this application, and both an existing sensing technology and a sensing technology evolved in the future may be used as one of the passive sensing technologies provided in this application.

### 3. Passive object

In embodiments of this application, the passive object is mainly an object that does not have a capability of transmitting and receiving a radio electromagnetic wave, but has a capability of reflecting a radio wave (including visible light, infrared light, ultraviolet light, and the like), for example, a pedestrian, an animal, a conventional vehicle, a building, or a bridge. For the passive object, parameters such as a location and a speed of the passive object may be obtained by using a passive sensing technology. The passive object may be described in a form of a cloud point (that is, cloud point) object. Each cloud point object includes one or more point coordinates, and each point coordinate corresponds to a location of a reflection point of a radio wave on a surface of the passive object.

In an existing sensing technology, because a sensing result needs to be obtained by relying on a sensing measurement signal, this manner is very likely to be interfered by environment clutter, resulting in low sensing precision. Therefore, the technical problem to be resolved in this application is how to improve sensing precision of the sensing technology.

FIG. 2 is a schematic flowchart of a communication method according to this application. The method is applicable to the communication system shown in FIG. 1c. As shown in FIG. 2, the method includes the following steps.

S210: A second device sends a first request message to a third device. Correspondingly, the third device receives the first request message.

In some feasible implementations, the second device may generate and send the first request message to the third device.

The first request message includes at least first motion status information of a terminal device. It should be noted that the first motion status information may be motion status information that is of the terminal device at a first moment and that is obtained by using an active positioning technology. Optionally, the motion status information provided in this application is related information that can indicate a motion status of the terminal device. The motion status information may include at least one of location information and speed information. Alternatively, the motion status information may indicate at least one of location information and speed information. Optionally, the location information may specifically include or indicate location coordinate data. The speed information may specifically include or indicate a speed vector or a speed vector component in a direction. All the first motion status information described herein, second motion status information described below, and the like belong to one type of the motion status information provided in this application, and therefore meet specific descriptions of the motion status information herein.

In an optional implementation, the second device may obtain the first motion status information of the terminal device when determining that a preset triggering condition is met. Then, the second device may generate the first request message that includes the first motion status information, and send the first request message to the third device. Optionally, the preset trigger condition includes but is not limited to one or more of the following: that a positioning service message is received, a preset request period is arrived, a preset user instruction is received, and the like. It should be understood that the preset trigger condition herein is merely an example. In actual implementation, the preset trigger condition may also include another possible condition. This is not specifically limited in this application.

Correspondingly, the third device may receive the first request message, and obtain content included in the first request message.

In an optional implementation, the first request message may further include a device identifier of the terminal device.

S220: The third device sends a first response message to the second device. Correspondingly, the second device may receive the first response message.

In some feasible implementations, after receiving the first request message, the third device may generate the first response message based on the content of the first request message. The first response message includes first information or second information. The first information indicates that the terminal device is associated with at least one sensing target, and the second indication information indicates that the terminal device is not associated with any sensing target. Herein, the so-called sensing target is an object sensed by the third device by using a passive sensing technology. In other words, when determining that the terminal device is associated with the at least one sensing target, the third device may generate the first response message that includes the first information. When determining that the terminal device is not associated with any sensing target, or detecting no sensing target around the terminal device, the third device may generate the first response message that includes the second information. It should be noted that, in this embodiment of this application, if the terminal device is associated with a sensing target, it indicates that the terminal device and the sensing target have characteristics of co-location and co-speed, that is, the terminal device and the sensing target are synchronously moving. Therefore, motion status information of the terminal device and motion status information of the sensing target may be the same or similar.

In some feasible implementations, whether the terminal device is associated with a sensing target is determined based on the motion status information of the terminal device and the motion status information of the sensing target. It should be understood that, after obtaining first motion information, the third device may extract location information of the terminal device, and obtain motion status information of a sensing target around the terminal device by using the passive sensing technology. For example, the third device may determine a sensing region associated with the terminal device by using the location information of the terminal device as a circle center, and obtain motion status information of a sensing target that can be sensed within the region. It should be understood that both the motion status information of the terminal device and the motion status information of the sensing target need to include at least location information and speed information. Then, the third device may determine, based on the motion status information of the terminal device and the motion status information of the sensing target, whether the terminal device is associated with the sensing target. If the terminal device is associated with the at least one sensing target, the third device may generate the first response message that includes the first information. If the terminal device is not associated with any sensing target, the third device may generate the first response message that includes the second information.

It should be understood that, when there are a plurality of sensing targets around the terminal device, a manner in which the third device determines whether each sensing target is associated with the terminal device is the same. Therefore, the following uses a sensing target i in all sensing targets that can be sensed around the terminal device as an example to describe a specific implementation process in which the third device determines whether the terminal device is associated with the sensing target.

In actual implementation, the third device may determine, in the following plurality of optional implementations, whether the terminal device is associated with the sensing target i.

In a first optional implementation, whether the terminal device is associated with the sensing target i may be determined based on the location information of the terminal device and the location information of the sensing target i. In other words, the third device may determine, based on the location information of the terminal device and the location information of the sensing target i, whether the terminal device is associated with the sensing target i.

Optionally, if the third device determines, based on the location information of the terminal device and the location information of the sensing target i, that a first distance between the terminal device and the sensing target i in a first time period is always less than or equal to a first length, it may determine that the terminal device is associated with the sensing target i. Correspondingly, if it determines, based on the location information of the terminal device and the location information of the sensing target i, that the first distance between the terminal device and the sensing target i at least at one time point in the first time period is greater than the first length, it may determine that the terminal device is not associated with the sensing target i. The first distance between the terminal device and the sensing target i in the first time period is determined based on location information obtained for the terminal device and the sensing target i in the first time period. It should be understood that the location information of the terminal device in the first time period may be obtained by the third device from prestored historical location information of the terminal device, or may be temporarily obtained by the third device from the second device. This is not limited in this application. The location information of the sensing target i in the first time period may also be obtained by the third device from prestored historical location information of the sensing target i.

For example, assume that the first time period includes detection moments 1, 2, and 3. The third device may obtain corresponding location information of the terminal device and the sensing target i separately at these moments, and then calculate first distances d1, d2, and d3 accordingly. If all the first distances d1, d2, and d3 are less than or equal to the first length, the third device may determine that the terminal device is associated with the sensing target i. If any one or more of the first distances d1, d2, and d3 are greater than the first length, the third device may determine that the terminal device is not associated with the sensing target i.

In the foregoing implementation, whether the terminal device is associated with the sensing target is determined based on a value of the first distance between the terminal device and the sensing target in the first time period. This solution is simple and easy to implement, and can not only improve a success rate of association between the terminal device and the sensing target, but also ensure accuracy and reliability of an association relationship between the terminal device and the sensing target. In this way, it can be ensured that a sensing result obtained based on the association relationship is more accurate and reliable.

Optionally, if the third device determines, based on the location information of the terminal device and the location information of the sensing target i, that a first displacement of the terminal device in a second time period is greater than or equal to a second length, and a second displacement of the sensing target i in a third time period is greater than or equal to a third length, it may determine that the terminal device is associated with the sensing target i. Correspondingly, if it determines, based on the location information of the terminal device and the location information of the sensing target i, that the first displacement of the terminal device in the second time period is less than the second length, and/or determining that the second displacement of the sensing target i in the third time period is less than the third length, it may determine that the terminal device is not associated with the sensing target i. Herein, the first displacement of the terminal device in the second time period may be determined based on location information that is of the terminal device in the second time period and that is obtained by the third device. The second displacement of the sensing target i in the third time period may be determined based on location information that is of the sensing target i in the third time period and that is obtained by the third device. It should be understood that the second time period and the third time period may be the same or may be different. Preferably, when the second time period and the third time period are different, the second time period and the third time period may also have an overlapping part.

For example, the third device may obtain location information corresponding to a start moment and an end moment of the terminal device in the second time period, and determine a first displacement d4 of the terminal device in the second time period based on the location information at the two moments. Similarly, the third device may obtain location information corresponding to a start moment and an end moment of the sensing target i in the third time period, and determine a second displacement d5 of the sensing target i in the third time period based on the location information at the two moments. If the first displacement d4 is greater than or equal to the second length, and determining that the second location d5 is greater than or equal to the third length, the third device determines that the terminal device is associated with the sensing target i. If the first displacement d4 is less than the second length, and/or determining that the second location d5 is less than the third length, the third device determines that the terminal device is not associated with the sensing target i.

In the foregoing implementation, whether the terminal device is associated with the sensing target is determined based on a value of the displacement of the terminal device in the second time period and a value of the displacement of the sensing target in the third time period. This solution is simple and reliable, can ensure accuracy and reliability of an association relationship between the terminal device and the sensing target, and can ensure higher precision of a sensing result obtained based on the association relationship.

Optionally, the first request message may include at least one of time period indication information and length indication information.

The time period indication information may indicate at least one of the first time period, the second time period, and the third time period. For example, the time period indication information may include an end moment and duration of the first time period, and the end moment and the duration of the first time period indicate the first time period. Certainly, the time period indication information may alternatively be implemented in another possible manner. This is not limited in this application.

The length indication information may indicate at least one of the first length, the second length, and the third length. Optionally, the length indication information may directly include at least one of the first length, the second length, and the third length.

Optionally, an end moment of at least one of the first time period, the second time period, and the third time period is the first moment, and the first moment is indicated by the first motion status information. Alternatively, the first moment is a moment at which the first motion status information is obtained. In this case, the location information included in the first motion status information may be used in a process in which the third device determines whether the terminal device is associated with the sensing target i. Herein, whether the terminal device is associated with the sensing target i is determined based on latest location information of the terminal device. This may further ensure accuracy and reliability of an association relationship between the terminal device and the sensing target.

In a second optional implementation, whether the terminal device is associated with the sensing target i is determined based on the location information of the terminal device, location information of the sensing target i, and location information of a first reference location or location information of a second reference location. Alternatively, the third device may determine, based on the location information of the terminal device, the location information of the sensing target i, and the location information of the first reference location or the location information of the second reference location, whether the terminal device is associated with the sensing target i. Herein, the first reference location may also be understood as an anchor used to determine whether the terminal device is associated with the sensing target i.

Optionally, if the third device determines that a direction deviation of the terminal device and the sensing target i relative to the first reference location in a fourth time period is always less than or equal to an angle threshold, it may determine that the terminal device is associated with the sensing target i. If it determines that the direction deviation of the terminal device and the sensing target i relative to the first reference location at least at one time point in the fourth time period is greater than the angle threshold, it may determine that the terminal device is not associated with the sensing target i. The direction deviation of the terminal device and the sensing target i relative to the first reference location in the fourth time period is determined by the third device based on the location information of the terminal device, the location information of the sensing target, and the location information of the first reference location.

For example, assume that the fourth time period includes detection moments 1, 2, and 3. The third device may obtain corresponding location information of the terminal device and the sensing target i separately at these moments. Further, the third device may determine, based on the location information of the terminal device at the detection moment 1 and the location information of the first reference location, a first direction of the terminal device relative to the first reference location at the detection moment 1. Then, the third device may determine, based on the location information of the sensing target i at the detection moment 1 and the location information of the first reference location, a second direction of the sensing target i relative to the first reference location at the detection moment 1. Then, the third device may calculate a deviation angle value between the first direction and the second direction, and determine the deviation angle value as a first direction deviation of the terminal device and the sensing target i relative to the first reference location at the detection moment 1. Similarly, the third device may calculate a second direction deviation of the terminal device and the sensing target i relative to the first reference location at the detection moment 2, and may calculate a third direction deviation of the terminal device and the sensing target i relative to the first reference location at the detection moment 3. Then, if all the first direction deviation, the second direction deviation, and the third direction deviation are less than or equal to the angle threshold, the third device may determine that the terminal device is associated with the sensing target i. If any one or more of the first direction deviation, the second direction deviation, and the third direction deviation are greater than the angle threshold, the third device may determine that the terminal device is not associated with the sensing target i.

In the foregoing implementation, whether the terminal device is associated with the sensing target is determined based on the direction deviation of the terminal device and the sensing target relative to the first reference location. This can not only improve a success rate of association between the terminal device and the sensing target, but also ensure accuracy and reliability of an association relationship between the terminal device and the sensing target. In this way, it can be ensured that a sensing result obtained based on the association relationship is more accurate and reliable.

Optionally, if the third device determines that a distance difference of the terminal device and the sensing target i relative to the second reference location in a fifth time period is always less than or equal to the fourth length, it may determine that the terminal device is associated with the sensing target i. If it determines that the distance difference of the terminal device and the sensing target i relative to the first reference location at least at one time point in the fifth time period is greater than the fourth length, it may determine that the terminal device is not associated with the sensing target i. The distance difference of the terminal device and the sensing target i relative to the first reference location in the fifth time period is determined by the third device based on location information of the terminal device and location information of the sensing target in the fifth time period and the location information of the first reference location.

For example, assume that the first time period includes detection moments 1, 2, and 3. The third device may obtain corresponding location information of the terminal device and the sensing target i separately at these moments. Further, the third device may determine, based on the location information of the terminal device at the detection moment 1 and the location information of the second reference location, a fourth distance d6 of the terminal device relative to the second reference location at the detection moment 1. Then, the third device may determine, based on the location information of the sensing target i at the detection moment 1 and the location information of the second reference location, a fifth distance d7 of the sensing target i relative to the second reference location at the detection moment 1. Then, the third device may calculate a difference between the fourth distance d6 and the fifth distance d7, and determine the difference as a first distance difference of the terminal device and the sensing target i relative to the second reference location at the detection moment 1. Similarly, the third device may calculate a second distance difference of the terminal device and the sensing target i relative to the second reference location at the detection moment 2, and may calculate a third distance difference of the terminal device and the sensing target i relative to the second reference location at the detection moment 3. Then, if all the first distance difference, the second distance difference, and the third distance difference are less than or equal to the fourth length, the third device may determine that the terminal device is associated with the sensing target i. If at least one of the first distance difference, the second distance difference, and the third distance difference is greater than the fourth length, the third device may determine that the terminal device is not associated with the sensing target i.

In the foregoing implementation, whether the terminal device is associated with the sensing target is determined based on the distance difference of the terminal device and the sensing target relative to the second reference location. This solution is simple and easy to implement, and can improve a success rate of association between the terminal device and the sensing target, thereby improving sensing efficiency.

Optionally, the first request message may include at least one of time period indication information, angle threshold indication information, length indication information, and reference location indication information.

The time period indication information may indicate at least one of the fourth time period and the fifth time period. For example, the time period indication information may include an end moment and duration of the fourth time period, and the end moment and the duration of the fourth time period indicate the first time period. Certainly, the time period indication information may alternatively be implemented in another possible manner. This is not limited in this application.

The length indication information may indicate the fourth length. The angle threshold indication information may indicate the angle threshold. The reference location indication information may indicate at least one of the location information of the first reference location and the location information of the second reference location.

Optionally, an end moment of the fourth time period and/or the fifth time period is the first moment, and the first moment is indicated by the first motion status information. Alternatively, the first moment is a moment at which the first motion status information is obtained. In this case, the location information included in the first motion status information may be used in a process in which the third device determines whether the terminal device is associated with the sensing target i. Herein, whether the terminal device is associated with the sensing target i is determined based on latest location information of the terminal device. This may further ensure accuracy and reliability of an association relationship between the terminal device and the sensing target.

In a third optional implementation, whether the terminal device is associated with the sensing target i is determined based on the speed information of the terminal device and speed information of the sensing target. In other words, the third device may determine, based on the speed information of the terminal device and the speed information of the sensing target, whether the terminal device is associated with the sensing target i.

Optionally, if the third device determines, in a sixth time period, that a speed difference between the terminal device and the sensing target i is less than or equal to a speed difference threshold, it may determine that the terminal device is associated with the sensing target. Correspondingly, if it determines, at least at one time point in the sixth time period, that the speed difference between the terminal device and the sensing target i is greater than the speed difference threshold, it may determine that the terminal device is not associated with the sensing target i. A speed difference between the terminal device and the sensing target in the sixth time period is determined based on speed information of the terminal device and speed information of the sensing target in the sixth time period.

For example, assume that the sixth time period includes detection moments 1, 2, and 3. The third device may obtain corresponding speed information of the terminal device and the sensing target i separately at these moments. Further, the third device may determine a first speed difference between the terminal device and the sensing target i at the detection moment 1 based on the speed information of the terminal device at the detection moment 1 and the speed information of the sensing target i at the detection moment 1. Similarly, the third device may calculate a second speed difference between the terminal device and the sensing target i at the detection moment 2, and may calculate a third speed difference between the terminal device and the sensing target i at the detection moment 3. Then, if the third device determines that all the first speed difference, the first speed difference, and the first speed difference are less than or equal to the speed difference threshold, it may determine that the terminal device is associated with the sensing target i. If it determines that at least one of the first speed difference, the first speed difference, and the first speed difference is greater than the speed difference threshold, it may determine that the terminal device is not associated with the sensing target i.

Further, optionally, the speed difference between the terminal device and the sensing target i may be a modulus value of a speed vector difference between the terminal device and the sensing target i at a same moment. Alternatively, the speed difference between the terminal device and the sensing target i may be a modulus value of a speed vector component difference between the terminal device and the sensing target i at a same moment and in a same direction.

In the foregoing implementation, whether the terminal device is associated with the sensing target is determined based on a value of the speed deviation between the terminal device and the sensing target. This solution is simple and easy to implement, and can not only improve a success rate of association between the terminal device and the sensing target, but also ensure accuracy and reliability of an association relationship between the terminal device and the sensing target. In this way, it can be ensured that a sensing result obtained based on the association relationship is more accurate and reliable.

Optionally, first request information may include at least one of time period indication information and speed difference threshold indication information.

The time period indication information indicates the sixth time period, and the speed difference threshold indication information indicates the speed difference threshold.

Optionally, an end moment of the sixth time period is the first moment, and the first moment is indicated by the first motion status information. Alternatively, the first moment is a moment at which the first motion status information is obtained. In this case, the location information included in the first motion status information may be used in a process in which the third device determines whether the terminal device is associated with the sensing target i. In this way, accuracy and reliability of an association relationship between the terminal device and the sensing target can be further ensured.

It should be additionally noted that the foregoing provides the plurality of optional solutions for determining whether the terminal device is associated with the sensing target i. In actual implementation, the third device may also combine the plurality of optional solutions for use. For example, the third device may determine, based on the speed difference between the terminal device and the sensing target i in the sixth time period and the direction deviation of the terminal device and the sensing target relative to the first reference location in the fourth time period, whether the terminal device is associated with the sensing target i. The plurality of optional solutions are combined for use, so that accuracy and reliability of an association relationship between the terminal device and the sensing target can be further ensured, thereby ensuring reliability of a sensing result obtained based on the association relationship.

It should be understood that in actual implementation, step S210 and step S220 may be repeatedly performed for a plurality of times until the first response message sent by the third device includes the first information.

It should be further noted that the first time period, the second time period, the third time period, the fourth time period, the fifth time period, or the sixth time period described above may be preset, or may be configured in real time. This is not specifically limited in this application.

In some feasible implementations, the third device may generate the first response message and feed back the first response message to the second device only when determining that the first information is obtained. In this case, the second device may send a plurality of first request messages to the third device, and each first request message includes new motion status information of the terminal device of the second device. For example, after sending one first request message to the third device, if the second device determines that the first response message that includes the first information is not received within a preset time period, it may obtain new motion status information of the terminal device, and generate a new first request message based on the new motion status information of the terminal device. Then, the second device may send the new request message to the third device, and wait for a response from the third device. This is repeated until the second device receives the first response message that includes the first information.

In some feasible implementations, the first information may include identification information of a first target. Herein, the first target includes the terminal device and the at least one sensing target.

Optionally, the identification information of the first target may be specifically an identifier group, and the identifier group includes a device identifier of the terminal device and an identifier of each sensing target in the at least one sensing target.

It should be understood that the identification information of the first target may alternatively be implemented in another manner. This is not limited in this application.

It should be noted that the sensing target in this application may be an active object or a passive object. Preferably, the sensing target in this application may be a passive object. The passive object does not have a capability of receiving and sending an electromagnetic wave, and the active object has a capability of receiving and sending an electromagnetic wave, for example, a mobile phone or a smart car.

In some feasible implementations, when the first response message includes the first information, the first response message further includes second motion status information, and the second motion status information corresponds to the terminal device and the at least one sensing target. Alternatively, the second motion status information is motion status information that is correspondingly shared by the terminal device and the at least one sensing target.

In the foregoing implementation, when it is determined that the terminal device is associated with the at least one sensing target, the first response message may be used to feed back the motion status information that is correspondingly shared by the terminal device and the at least one sensing target. In this way, the second device can quickly obtain the motion status information of the sensing target, and a service response speed of the second device can be improved.

Optionally, the second motion status information may be determined by the third device based on the first motion status information and third motion status information of one or more sensing targets in the at least one sensing target. For example, it is assumed that the motion status information includes location information and speed information. The third device may calculate an average value of location data indicated by the location information included in the first motion status information and location data indicated by location information included in third motion status information of a sensing target, and determine, based on the average value, the location information included in the second motion status information. The third device may calculate an average value of a speed vector indicated by the speed information included in the first motion status information and a speed vector indicated by speed information included in third motion status information of a sensing target, and determine, based on the average value, the speed information included in the second motion status information. It should be understood that the third device may alternatively determine the second motion status information in another manner based on the first motion status information and the third motion status information of the one or more sensing targets in the at least one sensing target. This is not limited in this application.

Correspondingly, the second device may receive the first response message, and obtain content included in the first response message.

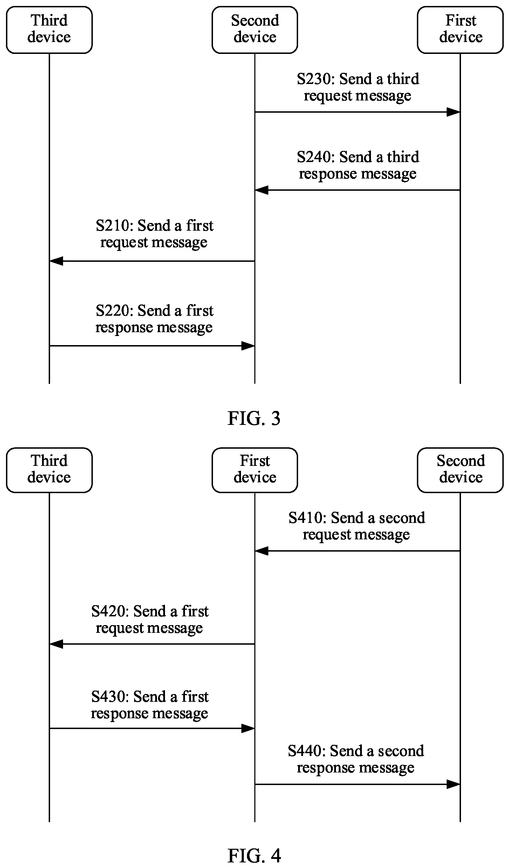

In some feasible implementations, FIG. 3 is still another schematic flowchart of a communication method according to this application. As shown in FIG. 3, the communication method may further include steps.

S230: A second device sends a third request message to a first device. Correspondingly, the first device receives the third request message.

In some feasible implementations, when needing to obtain motion status information of a terminal device, the second device may send the third request message to the first device. The third request message includes at least a device identifier of the terminal device.

S240: The first device sends a third response message to the second device. Correspondingly, the second device receives the third response message.

In some feasible implementations, after receiving the third request message, the first device may obtain first motion status information of the terminal device by using an active positioning technology. Then, the first device may generate the third response message that includes the first motion status information of the terminal device, and send the third response message to the second device.

Correspondingly, the second device may receive the third response message, and obtain the first motion status information of the terminal device. It should be understood that the first motion status information may be used by the second device to generate a first request message.

Optionally, the third request message may further include requirement parameter indication information corresponding to the motion status information, and the requirement parameter indication information indicates a type of motion status information that the second device needs to obtain. For example, the requirement parameter indication information may indicate a location and a speed. In this case, the first motion status information included in the third response message includes at least location information and speed information of the terminal device. It should be understood that the requirement parameter indication information may alternatively indicate another type of motion status information, for example, a delay. This is not limited in this application.

It should be noted that, in actual implementation, the second device and the first device may repeatedly perform step S230 and step S240 until the second device does not need to obtain the motion status information of the terminal device.

In the communication method shown in FIG. 2 or FIG. 3, the first device sends, to a third device, the first request message that includes the first motion status information of the terminal device. The third device may feed back a first response message based on the first request message, and notify, by using first information or second information in the first response message, whether the terminal device has an associated sensing target. When the first device determines, based on the first response message, at least one sensing target associated with the terminal device, when the first device senses the at least one sensing target by using a passive sensing technology, interference caused by environment clutter may be reduced with reference to a positioning result of the terminal device, to obtain a sensing result with higher precision. Therefore, according to the foregoing method, the impact of environment clutter on the sensing result can be effectively reduced, and sensing precision of the passive sensing technology can be improved.

FIG. 4 is a schematic flowchart of still another communication method according to this application. The communication method is applicable to the communication system shown in FIG. 1a. As shown in FIG. 4, the communication method includes the following steps.

S410: A second device sends a second request message to a first device. Correspondingly, the first device receives the second request message.

In some feasible implementations, when needing to know whether a terminal device has an associated sensing target, the second device may send one second request message to the first device. The second request message includes at least a device identifier of the terminal device. Correspondingly, the first device may receive the second request message.

S420: The first device sends a first request message to a third device. Correspondingly, the third device receives the first request message.

In some feasible implementations, after receiving the second request message, the first device may determine, based on the device identifier that is of the terminal device and that is included in the second request message, that the second device needs to know whether the terminal device has an associated sensing target. Further, the first device initiates an active positioning technology to obtain first motion status information of the terminal device, and generates the first request message that includes the first motion status information. Then, the first device may send the first request message to the third device. Correspondingly, the third device may receive the first request message.

S430: The third device sends a first response message to the first device. Correspondingly, the first device receives the first response message.

In some feasible implementations, after receiving the first request message, the third device may generate the first response message based on content of the first request message. The first response message includes first information or second information. The first information indicates that the terminal device is associated with at least one sensing target, and the second indication information indicates that the terminal device is not associated with any sensing target.

Herein, for a specific process in which the third device generates the first response message, refer to the specific process in which the third device generates the first response message described in step S220 in Embodiment 1. Details are not described herein again.

After generating the first response message, the third device may send the first response message to the first device. Correspondingly, the first device may receive the first response message, and obtain content included in the first response message.

S440: The first device sends a second response message to the second device. Correspondingly, the second device receives the second response message.

In some feasible implementations, after receiving the first response message and obtaining the content included in the first response message, the first device may generate the second response message based on the content. For example, if the first response message includes the first information, the first device may generate second response message that includes the first information. If the first response message includes the second information, the first device may generate second response message that includes the second information. After generating the second response message, the first device may send the second response message to the second device.

Correspondingly, the second device may receive the second response message, and extract the content included in the second response message, to determine whether the terminal device has associated sensing targets, and if the terminal device has the associated sensing targets, what are the associated sensing targets. For example, it is assumed that the second response message includes the first information. In this case, the second device may determine, based on the first information, an identifier of each sensing target in the at least one sensing target associated with the terminal device.

It should be additionally noted that, in actual implementation, after receiving the second request message sent by the second device, the first device and the third device may repeatedly perform the foregoing steps S420, S430, and S440 for a plurality of times until the second device sends a message to the first device. Alternatively, after receiving the second request message sent by the second device, the first device and the third device may repeatedly perform the foregoing steps S420, S430, and S440 for a plurality of times until the second response message includes the foregoing first information.

In the communication method shown in FIG. 4, the second device sends, to the third device, the first request message that includes the first motion status information of the terminal device. The third device may feed back the first response message based on the first request message, and notify, by using the first information or the second information in the first response message, whether the terminal device has an associated sensing target. When the second device determines, based on the first response message, the at least one sensing target associated with the terminal device, when the second device senses the at least one sensing target by using a passive sensing technology, interference caused by environment clutter may be reduced with reference to a positioning result of the terminal device, to obtain a sensing result with higher precision. Therefore, according to the foregoing method, the impact of environment clutter on the sensing result can be effectively reduced, and sensing precision of the passive sensing technology can be improved.

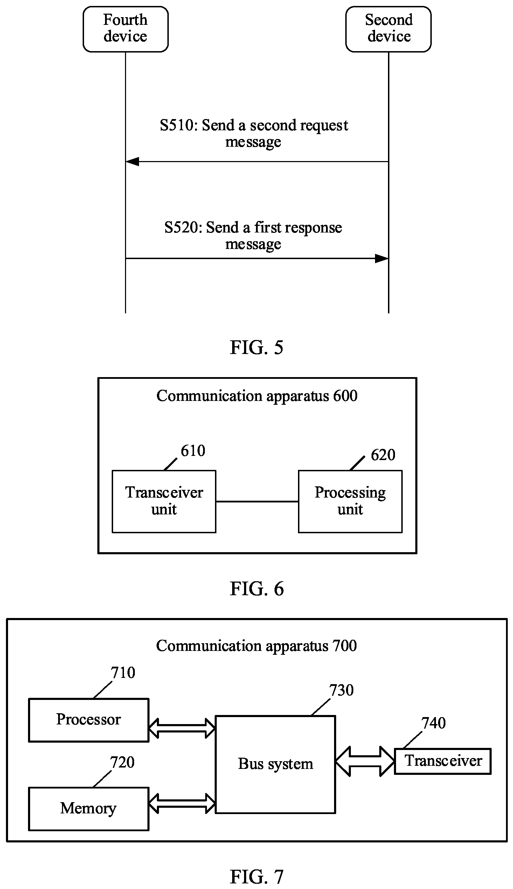

FIG. 5 is a schematic flowchart of still another communication method according to this application. The communication method is applicable to the communication system shown in FIG. 1b. As shown in FIG. 5, the communication method may include the following steps.

S510: A second device sends a second request message to a fourth device. Correspondingly, the fourth device receives the second request message.

In some feasible implementations, when needing to know whether a terminal device has an associated sensing target, the second device may send one second request message to the fourth device. The second request message includes at least a device identifier of the terminal device. Correspondingly, the fourth device may receive the second request message.

S520: The fourth device sends a first response message to the second device. Correspondingly, the second device receives the first response message.

In some feasible implementations, after receiving the second request message, the fourth device may generate the first response message based on content of the second request message. Herein, for specific content of the first response message, refer to the corresponding description in step S220. Details are not described herein again. Specifically, after receiving the second request message from the second device, the fourth device may determine, based on the device identifier that is of the terminal device and that is included in the second request message, that the second device needs to know whether the terminal device has an associated sensing target. Further, the fourth device initiates an active positioning technology to obtain motion status information of the terminal device. Then, the fourth device may extract location information of the terminal device from the motion status information of the terminal device, and obtain motion status information of a sensing target around the terminal device by using the passive sensing technology. For example, the fourth device may determine a sensing region associated with the terminal device by using the location information of the terminal device as a circle center, and obtain motion status information of a sensing target that can be sensed within the region. It should be understood that both the motion status information of the terminal device and the motion status information of the sensing target need to include at least location information and speed information. Then, the third device may determine, based on the motion status information of the terminal device and the motion status information of the sensing target, whether the terminal device is associated with the sensing target. If the terminal device is associated with the at least one sensing target, the third device may generate the first response message that includes the first information. If the terminal device is not associated with any sensing target, the third device may generate the first response message that includes the second information.

In actual implementation, the fourth device may determine, in a plurality of optional implementations, whether the terminal device is associated with the sensing target i. It should be understood that, when there are a plurality of sensing targets around the terminal device, a manner in which the fourth device determines whether each sensing target is associated with the terminal device is the same. Therefore, the following uses a sensing target i in all sensing targets that can be sensed around the terminal device as an example to describe a specific implementation process in which the fourth device determines whether the terminal device is associated with the sensing target.

In a first optional implementation, whether the terminal device is associated with the sensing target i may be determined based on the location information of terminal device and location information of the sensing target i. In other words, the fourth device may determine, based on the location information of the terminal device and the location information of the sensing target i, whether the terminal device is associated with the sensing target i. It should be understood that, for a specific process in which the fourth device may determine, based on the location information of the terminal device and the location information of the sensing target i, whether the terminal device is associated with the sensing target i, refer to the process in which the third device determines, based on the location information of the terminal device and the location information of the sensing target i, whether the terminal device is associated with the sensing target i described in step S220. Details are not described herein again.

Optionally, the second request message may include at least one of time period indication information and length indication information.

The time period indication information may indicate at least one of the first time period, the second time period, and the third time period. For example, the time period indication information may include an end moment and duration of the first time period, and the end moment and the duration of the first time period indicate the first time period. Certainly, the time period indication information may alternatively be implemented in another possible manner. This is not limited in this application.

The length indication information may indicate at least one of the first length, the second length, and the third length. Optionally, the length indication information may directly include at least one of the first length, the second length, and the third length.

Optionally, an end moment of at least one of the first time period, the second time period, and the third time period is the first moment, and the first moment is indicated by the first motion status information. Alternatively, the first moment is a moment at which the first motion status information is obtained.

In a second optional implementation, whether the terminal device is associated with the sensing target i is determined based on the location information of the terminal device, location information of the sensing target i, and location information of a preset first reference location or location information of a second reference location. Alternatively, the fourth device may determine, based on the location information of the terminal device, the location information of the sensing target i, and the location information of the preset first reference location or the location information of the second reference location, whether the terminal device is associated with the sensing target i. Herein, for a specific process in which the fourth device determines, based on the location information of the terminal device, the location information of the sensing target i, and the location information of the preset first reference location or the location information of the second reference location, whether the terminal device is associated with the sensing target i, refer to the process in which the third device determines, based on the location information of the terminal device, the location information of the sensing target i, and the location information of the preset first reference location or the location information of the second reference location, whether the terminal device is associated with the sensing target i described in step S220. Details are not described herein again.

Optionally, the second request message may include at least one of time period indication information, angle threshold indication information, and length indication information.

The time period indication information may indicate at least one of the fourth time period and the fifth time period. For example, the time period indication information may include an end moment and duration of the fourth time period, and the end moment and the duration of the fourth time period indicate the first time period. Certainly, the time period indication information may alternatively be implemented in another possible manner. This is not limited in this application.

The length indication information may indicate the fourth length. The angle threshold indication information may indicate the angle threshold.

Optionally, an end moment of the fourth time period and/or the fifth time period is the first moment, and the first moment is indicated by the first motion status information. Alternatively, the first moment is a moment at which the first motion status information is obtained. In this case, the location information included in the first motion status information may be used in a process in which the fourth device determines whether the terminal device is associated with the sensing target i. Herein, whether the terminal device is associated with the sensing target i is determined based on latest location information of the terminal device. This may further ensure accuracy and reliability of an association relationship between the terminal device and the sensing target.

In a third optional implementation, whether the terminal device is associated with the sensing target i is determined based on the speed information of the terminal device and speed information of the sensing target. In other words, the fourth device may determine, based on the speed information of the terminal device and the speed information of the sensing target, whether the terminal device is associated with the sensing target i. Herein, for a specific process in which the fourth device determines, based on the speed information of the terminal device and the speed information of the sensing target, whether the terminal device is associated with the sensing target i, refer to the process in which the third device determines, based on the speed information of the terminal device and the speed information of the sensing target, whether the terminal device is associated with the sensing target i described in step S220. Details are not described herein again.

Optionally, the second request message may include at least one of time period indication information and speed difference threshold indication information.

The time period indication information indicates the sixth time period, and the speed difference threshold indication information indicates the speed difference threshold.

Optionally, an end moment of the sixth time period is the first moment, and the first moment is indicated by the first motion status information. Alternatively, the first moment is a moment at which the first motion status information is obtained. In this case, the location information included in the first motion status information may be used in a process in which the fourth device determines whether the terminal device is associated with the sensing target i. In this way, accuracy and reliability of an association relationship between the terminal device and the sensing target can be further ensured.

It should be additionally noted that the foregoing provides the plurality of optional solutions for determining whether the terminal device is associated with the sensing target i. In actual implementation, the fourth device may also combine the plurality of optional solutions for use. The plurality of optional solutions are combined for use, so that accuracy and reliability of an association relationship between the terminal device and the sensing target can be further ensured, thereby ensuring reliability of a sensing result obtained based on the association relationship.

It should be understood that in actual implementation, step S510 and step S520 may be repeatedly performed for a plurality of times until the first response message sent by the fourth device includes the first information.

In some feasible implementations, the fourth device may generate the first response message and feed back the first response message to the second device only when determining that the first information is obtained. In this case, the second device may send only a plurality of second request messages to the fourth device, and each second request message includes an identifier of the terminal device of the second device. For example, after sending one second request message to the fourth device, if the second device determines that the first response message that includes the first information is not received within a preset time period, it resends the second request message until the second device receives the first response message that includes the first information.

In some feasible implementations, the second device may send the second request message only once, and the fourth device repeatedly performs step S520 until the second device receives the first response message that includes the first information.

It should be added that for specific descriptions of the first information and the sensing target, refer to the descriptions of the first information and the sensing target in step S220. Details are not described herein again.

In some feasible implementations, when the first response message includes the first information, the first response message further includes second motion status information, and the second motion status information corresponds to the terminal device and the at least one sensing target. Alternatively, the second motion status information is motion status information that is correspondingly shared by the terminal device and the at least one sensing target.

In the foregoing implementation, when it is determined that the terminal device is associated with the at least one sensing target, the first response message may be used to feed back the motion status information that corresponds to the terminal device and the at least one sensing target. In this way, the second device can quickly obtain the motion status information of the sensing target, and a service response speed of the second device can be improved.

Optionally, the second motion status information may be determined by the fourth device based on the motion status information of the terminal device and motion status information of one or more sensing targets in the at least one sensing target.

Correspondingly, the second device may receive the first response message, and extract the content included in the second response message, to determine whether the terminal device has associated sensing targets, and if the terminal device has the associated sensing targets, what are the associated sensing targets. For example, it is assumed that the first response message includes the first information. In this case, the second device may determine, based on the first information, an identifier of each sensing target in the at least one sensing target associated with the terminal device.

In the communication method shown in FIG. 5, the second device sends, to the fourth device, the second request message that includes the device identifier of the terminal device. The fourth device may feed back the first response message based on the second request message, and notify, by using the first information or the second information in the first response message, whether the terminal device has an associated sensing target. When the fourth device determines, based on the first response message, the at least one sensing target associated with the terminal device, when the fourth device senses the at least one sensing target by using a passive sensing technology, interference caused by environment clutter may be reduced with reference to a positioning result of the terminal device, to obtain a sensing result with higher precision. Therefore, according to the foregoing method, the impact of environment clutter on the sensing result can be effectively reduced, and sensing precision of the passive sensing technology can be improved.

The foregoing describes in detail the communication methods provided in embodiments of this application with reference to FIG. 2 to FIG. 5. With reference to FIG. 6 and FIG. 7, the following describes in detail communication apparatuses provided in embodiments of this application. It should be understood that descriptions of embodiments of the communication apparatuses correspond to the descriptions of embodiments of the communication methods, and therefore for a part that is not described in detail, refer to the foregoing method embodiments.

FIG. 6 is a diagram of a structure of a communication apparatus according to this application. As shown in FIG. 6, a communication apparatus 600 may include a transceiver unit 610 and a processing unit 620.

In some feasible implementations, the communication apparatus 600 may correspond to the first device in the communication method shown in FIG. 4, or a component (for example, a circuit, a chip, or a chip system) configured in the first device.

Specifically, the processing unit 620 is configured to generate a first request message. The first request message includes first motion status information of a terminal device. The transceiver unit 610 is configured to send the first request message to a third device. The transceiver unit 610 is further configured to receive a first response message from the third device. The first response message includes first information or second information, the first information indicates that the terminal device is associated with at least one sensing target, and the second indication information indicates that the terminal device is not associated with any sensing target. It should be understood that, for implementation of other functions of the units, refer to the corresponding descriptions of the method steps implemented by the first device in the communication method shown in FIG. 4. Details are not described herein again.

In some feasible implementations, the communication apparatus 600 may correspond to the third device in the communication method shown in FIG. 4, or a component (for example, a circuit, a chip, or a chip system) configured in the third device.

In specific implementation, the transceiver unit 610 is configured to receive a first request message from a first device, where the first request message includes first motion status information of a terminal device. The processing unit 620 is configured to generate a first response message. The transceiver unit 610 is configured to send the first response message to the first device, where the first response message includes first information or second information, the first information indicates that the terminal device is associated with at least one sensing target, and the second indication information indicates that the terminal device is not associated with any sensing target. It should be understood that, for implementation of other functions of the units, refer to the corresponding descriptions of the method steps implemented by the third device in the communication method shown in FIG. 4. Details are not described herein again.

In some feasible implementations, the communication apparatus 600 may correspond to the second device in the communication method shown in FIG. 4, or a component (for example, a circuit, a chip, or a chip system) configured in the second device.

The processing unit 620 is configured to generate a second request message. The transceiver unit 610 is configured to send the second request message to a first device, where the second request message includes at least a device identifier of a terminal device. The transceiver unit 610 is further configured to receive a first response message from the first device, where the first response message includes first information or second information, the first information indicates that the terminal device is associated with at least one sensing target, and the second indication information indicates that the terminal device is not associated with any sensing target. It should be understood that, for implementation of other functions of the units, refer to the corresponding descriptions of the method steps implemented by the second device in the communication method shown in FIG. 4. Details are not described herein again.

In some feasible implementations, the communication apparatus 600 may correspond to the third device in the communication methods shown in FIG. 2 and FIG. 3, or a component (for example, a circuit, a chip, or a chip system) configured in the third device.

The transceiver unit 610 is configured to receive a first request message from a second device, where the first request message includes first motion status information of a terminal device. The processing unit 620 is configured to generate a second response message. The transceiver unit 610 is configured to send a first response message to the second device. The first response message includes first information or second information, the first information indicates that the terminal device is associated with at least one sensing target, and the second indication information indicates that the terminal device is not associated with any sensing target. It should be understood that for implementation of other functions of the units, refer to the corresponding descriptions of the method steps implemented by the first device in the communication methods shown in FIG. 2 and FIG. 3. Details are not described herein again.

In some feasible implementations, the communication apparatus 600 may correspond to the second device in the communication methods shown in FIG. 2 and FIG. 3, or a component (for example, a circuit, a chip, or a chip system) configured in the first device.

In specific implementation, the processing unit 620 is configured to generate a first request message. The transceiver unit 610 is configured to send the first request message to a third device, where the first request message includes first motion status information of a terminal device. The transceiver unit 610 is further configured to receive a first response message from the third device. The first response message includes first information or second information, the first information indicates that the terminal device is associated with at least one sensing target, and the second indication information indicates that the terminal device is not associated with any sensing target. It should be understood that for implementation of other functions of the units, refer to the corresponding descriptions of the method steps implemented by the second device in the communication methods shown in FIG. 2 and FIG. 3. Details are not described herein again.

In some feasible implementations, the communication apparatus 600 may correspond to the fourth device in the communication method shown in FIG. 5, or a component (for example, a circuit, a chip, or a chip system) configured in the fourth device.

The transceiver unit 610 is configured to receive a second request message from a second device, where the second request message includes at least a device identifier of a terminal device. The processing unit 620 is configured to generate a first response message. The transceiver unit 610 is configured to send a first response message to the second device. The first response message includes first information or second information, the first information indicates that the terminal device is associated with at least one sensing target, and the second indication information indicates that the terminal device is not associated with any sensing target. It should be understood that, for implementation of other functions of the units, refer to the corresponding descriptions of the method steps implemented by the fourth device in the communication method shown in FIG. 5. Details are not described herein again.

In some feasible implementations, the communication apparatus 600 may correspond to the second device in the communication method shown in FIG. 5, or a component (for example, a circuit, a chip, or a chip system) configured in the second device.

In specific implementation, the processing unit 620 is configured to generate a second request message. The transceiver unit 610 is configured to send the second request message to a fourth device. The second request message includes at least a device identifier of a terminal device. The transceiver unit 610 is further configured to receive a first response message from the fourth device. The first response message includes first information or second information, the first information indicates that the terminal device is associated with at least one sensing target, and the second indication information indicates that the terminal device is not associated with any sensing target. It should be understood that for implementation of other functions of the units, refer to the corresponding descriptions of the method steps implemented by the second device in the communication method shown in FIG. 5. Details are not described herein again.

FIG. 7 is a diagram of a structure of still another communication apparatus according to this application. A communication apparatus 700 may be configured to implement operations performed by the first device, the second device, the third device, or the fourth device in the foregoing embodiments, or a communication apparatus 700 may be the first device, the second device, the third device, or the fourth device described above. The communication apparatus 700 includes a processor 710, a memory 720, and a bus system 730.

The memory 720 includes but is not limited to a RAM, a ROM, an EPROM, or a CD-ROM. The memory 720 is configured to store related instructions and data. The memory 720 stores the following elements: an executable module or a data structure, or a subset or an extended set thereof:
operation instructions, including various operation instructions and used to implement various operations; and
an operating system, including various system programs and configured to implement various basic services and process a hardware-based task.

Only one memory is shown in FIG. 7. Certainly, a plurality of memories may be disposed as needed.

The communication apparatus 700 may further include a transceiver 740. The transceiver 740 may be a communication module or a transceiver circuit. In this embodiment of this application, the transceiver 740 is configured to perform message sending and receiving operations in the foregoing embodiments.

The processor 710 may be a controller, a CPU, a general-purpose processor, a DSP, an ASIC, an FPGA or another programmable logic device, a transistor logic device, a hardware component, or any combination thereof. Alternatively, the processor 710 may be a combination of processors for implementing a computing function, for example, a combination of one or more microprocessors, or a combination of the DSP and a microprocessor.

In specific application, components of the communication apparatus 700 are coupled together via the bus system 730. In addition to a data bus, the bus system 730 may include a power supply bus, a control bus, a status signal bus, and the like. However, for the purpose of clear description, various types of buses are represented as the bus system 730 in FIG. 7. For ease of representation, only illustrative depiction is provided in FIG. 7.

In specific implementation, the communication apparatus 700 may perform the steps of the method performed by the first device, the second device, the third device, or the fourth device in the foregoing embodiments. Specifically, when the communication apparatus 700 is configured to implement the steps performed by the first device, the second device, the third device, or the fourth device in the communication method provided in this embodiment, the processor 710 may be configured to implement a function of the processing unit 620, and the transceiver 740 may be configured to implement a function of the transceiver unit 610.

It should be noted that, during actual application, the processor in this embodiment of this application may be an integrated circuit chip, and has a signal processing capability. In an implementation process, the steps in the foregoing method embodiments can be implemented by using a hardware integrated logical circuit in the processor, or by using instructions in a form of software. The processor may be a general-purpose processor, a digital signal processor (digital signal Processor, DSP), an application-specific integrated circuit (application-specific integrated circuit, ASIC), a field programmable gate array (field programmable gate array, FPGA) or another programmable logic device, a discrete gate or transistor logic device, or a discrete hardware component. It may implement or perform the methods, the steps, and logical block diagrams that are disclosed in embodiments of this application. The general-purpose processor may be a microprocessor, or the processor may be any conventional processor or the like. The steps in the methods disclosed with reference to embodiments of this application may be directly performed and completed by a hardware decoding processor, or may be performed and completed by using a combination of hardware in the decoding processor and a software module. A software module may be located in a mature storage medium in the art, such as a random access memory, a flash memory, a read-only memory, a programmable read-only memory, an electrically erasable programmable memory, or a register. The storage medium is located in the memory, and a processor reads information in the memory and completes the steps in the foregoing methods in combination with hardware of the processor.

It may be understood that the memory in this embodiment of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through example but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synchlink DRAM, SLDRAM), and a direct rambus dynamic random access memory (direct rambus RAM, DR RAM). It should be noted that the memory described in embodiments of this application aims to include but is not limited to these memories and any memory of another proper type.

This application further provides a computer-readable medium. The computer-readable medium stores a computer program. When the computer program is executed by a computer, the method steps performed by the first device, the second device, the third device, or the fourth device in the communication methods provided in FIG. 2 to FIG. 5 are implemented.

This application further provides a computer program product. When the computer program product is executed by a computer, the method steps performed by the first device, the second device, the third device, or the fourth device in the communication methods provided in FIG. 2 to FIG. 5 are implemented.

This application further provides a chip, at least including a processor. The processor is configured to execute computer-executable instructions, so that an apparatus in which the chip is installed implements the method steps performed by the first device, the second device, the third device, or the fourth device in the communication methods provided in FIG. 2 to FIG. 5.

Optionally, the chip may further include an interface circuit. The interface circuit is configured to receive the computer-executable instructions and transmit the computer-executable instructions to the processor.

This application further provides a chip system. The chip system includes a processor, configured to support an apparatus in which the chip system is installed in implementing the method steps performed by the first device, the second device, the third device, or the fourth device in the communication methods provided in FIG. 2 to FIG. 5, for example, generating or processing data and/or information in the foregoing methods. In a possible design, the chip system further includes a memory. The memory is configured to store program instructions and data that are necessary for a data sending device. The chip system may include a chip, or may include a chip and another discrete component.

This application further provides a communication system. The communication system includes at least the first device, the second device, and the third device described above. The first device, the second device, and the third device cooperate with each other to implement the communication method shown in FIG. 4.

This application further provides a communication system. The communication system includes at least the second device and the third device described above. The second device and the third device cooperate with each other to implement the communication method shown in FIG. 2 or FIG. 3.

This application further provides a communication system. The communication system includes at least the second device and the fourth device described above. The second device and the fourth device cooperate with each other to implement the communication method shown in FIG. 5.

All or a part of the foregoing method embodiments may be implemented by using software, hardware, firmware, or any combination thereof. When software is used to implement embodiments, all or a part of embodiments may be implemented in a form of a computer program product. The computer program product includes one or more computer instructions. When the computer instructions are loaded and executed on the computer, the procedure or functions according to embodiments of this application are all or partially generated. The computer may be a general-purpose computer, a dedicated computer, a computer network, or other programmable apparatuses. The computer instructions may be stored in a computer-readable storage medium, or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a high-density digital video disc (digital video disc, DVD)), a semiconductor medium (for example, a solid state drive (solid state drive, SSD)), or the like.

In various embodiments of this application, unless otherwise stated or if there is a logic conflict, terms and/or descriptions in different embodiments are consistent and may be mutually referenced, and technical features in different embodiments may be combined into a new embodiment based on an internal logical relationship thereof.

It may be understood that various numbers in embodiments of this application are merely used for differentiation for ease of description, and are not used to limit the scope of embodiments of this application. Sequence numbers of the foregoing processes do not mean an execution sequence, and the execution sequence of the processes should be determined based on functions and internal logic of the processes.

The foregoing descriptions are merely examples of embodiments of the technical solutions of this application, but are not intended to limit the protection scope of this application. Any modification, equivalent replacement, or improvement made without departing from the spirit and principle of this application shall fall within the protection scope of this application.

## Claims

1. A communication method, wherein the method comprises:
sending a first request message, wherein the first request message comprises first motion status information of a terminal device; and
receiving a first response message, wherein the first response message comprises first information or second information, the first information indicates that the terminal device is associated with at least one sensing target, and the second indication information indicates that the terminal device is not associated with any sensing target.

2. A communication method, wherein the method comprises:
receiving a first request message, wherein the first request message comprises first motion status information of a terminal device; and
sending a first response message, wherein the first response message comprises first information or second information, the first information indicates that the terminal device is associated with at least one sensing target, and the second indication information indicates that the terminal device is not associated with any sensing target.

3. The method according to claim 1 or 2, wherein the first information comprises identification information of a first target, and the first target comprises the terminal device and the at least one sensing target.

4. The method according to any one of claims 1 to 3, wherein the first response message comprises the first information, the first response message further comprises second motion status information, and the second motion status information corresponds to the terminal device and the at least one sensing target.

5. The method according to any one of claims 1 to 4, wherein whether the terminal device is associated with a sensing target is determined based on motion status information of the terminal device and motion status information of the sensing target.

6. The method according to claim 5, wherein that whether the terminal device is associated with the sensing target is determined based on the motion status information of the terminal device and the motion status information of the sensing target comprises:
whether the terminal device is associated with the sensing target is determined based on location information of the terminal device and location information of the sensing target.

7. The method according to claim 6, wherein that whether the terminal device is associated with the sensing target is determined based on the location information of the terminal device and the location information of the sensing target comprises:
a first distance between the terminal device and the sensing target in a first time period is less than or equal to a first length, and the terminal device is associated with the sensing target, wherein the first distance is determined based on location information of the terminal device and location information of the sensing target in the first time period; or
a first displacement of the terminal device in a second time period is greater than or equal to a second length, and a second displacement of the sensing target in a third time period is greater than or equal to a third length, and the terminal device is associated with the sensing target, wherein the first displacement is determined based on location information of the terminal device in the second time period, and the second displacement is determined based on location information of the sensing target in the third time period.

8. The method according to claim 5, wherein that whether the terminal device is associated with the sensing target is determined based on the motion status information of the terminal device and the motion status information of the sensing target comprises:
whether the terminal device is associated with the sensing target is determined based on speed information of the terminal device and speed information of the sensing target.

9. The method according to claim 8, wherein that whether the terminal device is associated with the sensing target is determined based on the speed information of the terminal device and the speed information of the sensing target comprises:
in a sixth time period, a speed difference between the terminal device and the sensing target is less than or equal to a speed difference threshold, and the terminal device is associated with the sensing target, wherein the speed difference between the terminal device and the sensing target is determined based on the speed information of the terminal device and the speed information of the sensing target.

10. The method according to claim 1, wherein the method is applied to a first device, and the method further comprises:
receiving a second request message from a second device, wherein the second request message comprises at least a device identifier of the terminal device.

11. The method according to claim 10, wherein the method further comprises:
sending a second response message to the second device, wherein the second response message comprises the first information or the second information.

12. A communication method, wherein the method comprises:
sending a second request message, wherein the second request message comprises at least a device identifier of the terminal device; and
receiving a first response message, wherein the first response message comprises first information or second information, the first information indicates that the terminal device is associated with at least one sensing target, and the second indication information indicates that the terminal device is not associated with any sensing target.

13. A communication method, wherein the method comprises:
receiving a second request message, wherein the second request message comprises at least a device identifier of the terminal device; and
sending a first response message, wherein the first response message comprises first information or second information, the first information indicates that the terminal device is associated with at least one sensing target, and the second indication information indicates that the terminal device is not associated with any sensing target.

14. The method according to claim 12 or 13, wherein the first information comprises identification information of a first target, and the first target comprises the terminal device and the at least one sensing target.

15. The method according to any one of claims 12 to 14, wherein the first response message comprises the first information, the first response message further comprises second motion status information, and the second motion status information corresponds to the terminal device and the at least one sensing target.

16. The method according to any one of claims 12 to 15, wherein whether the terminal device is associated with a sensing target is determined based on motion status information of the terminal device and motion status information of the sensing target.

17. The method according to claim 16, wherein that whether the terminal device is associated with the sensing target is determined based on the motion status information of the terminal device and the motion status information of the sensing target comprises:
whether the terminal device is associated with the sensing target is determined based on location information of the terminal device and location information of the sensing target.

18. The method according to claim 17, wherein that whether the terminal device is associated with the sensing target is determined based on the location information of the terminal device and the location information of the sensing target comprises:
a first distance between the terminal device and the sensing target in a first time period is less than or equal to a first length, and the terminal device is associated with the sensing target, wherein the first distance is determined based on location information of the terminal device and location information of the sensing target in the first time period; or
a first displacement of the terminal device in a second time period is greater than or equal to a second length, a second displacement of the sensing target in a third time period is greater than or equal to a third length, and the terminal device is associated with the sensing target, wherein the first displacement is determined based on location information of the terminal device in the second time period, and the second displacement is determined based on location information of the sensing target in the third time period.

19. The method according to claim 18, wherein the second request message comprises at least one of time period indication information and length indication information; and
the time period indication information indicates at least one of the first time period, the second time period, and the third time period, and the length indication information indicates at least one of the first length, the second length, and the third length.

20. The method according to claim 17, wherein that whether the terminal device is associated with the sensing target is determined based on the motion status information of the terminal device and the motion status information of the sensing target comprises:
whether the terminal device is associated with the sensing target is determined based on the location information of the terminal device, the location information of the sensing target, and location information of a first reference location or location information of a second reference location.

21. The method according to claim 20, wherein that whether the terminal device is associated with the sensing target is determined based on the location information of the terminal device, the location information of the sensing target, and the location information of the first reference location or the location information of the second reference location comprises:
a direction deviation of the terminal device and the sensing target relative to the first reference location in a fourth time period is less than or equal to an angle threshold, and the terminal device is associated with the sensing target, wherein the direction deviation is determined based on the location information of the terminal device, the location information of the sensing target, and the location information of the first reference location; or
a distance difference of the terminal device and the sensing target relative to the second reference location in a fifth time period is less than or equal to a fourth length, and the terminal device is associated with the sensing target, wherein the distance difference is determined based on the location information of the terminal device, the location information of the sensing target, and the location information of the second reference location.

22. The method according to claim 21, wherein the second request information comprises at least one of time period indication information, angle threshold indication information, and length indication information; and
the time period indication information indicates at least one of the fourth time period and the fifth time period, the angle threshold indication information indicates the angle threshold, and the length indication information indicates the fourth length.

23. The method according to claim 17, wherein that whether the terminal device is associated with the sensing target is determined based on the motion status information of the terminal device and the motion status information of the sensing target comprises:
whether the terminal device is associated with the sensing target is determined based on speed information of the terminal device and speed information of the sensing target.

24. A communication apparatus, wherein the communication apparatus comprises units configured to implement the communication method according to any one of claims 1 to 11 or claims 12 to 23.

25. A computer-readable storage medium, wherein the computer-readable storage medium stores a computer program, and when the computer program is run, the communication method according to any one of claims 1 to 11 is implemented, or the communication method according to any one of claims 12 to 23 is implemented.

26. A chip, comprising a processor, wherein
the processor is configured to execute computer-executable instructions, so that an apparatus in which the chip is installed performs the communication method according to any one of claims 1 to 11 or the communication method according to any one of claims 12 to 23.

27. The chip according to claim 26, wherein the chip further comprises an interface circuit, and the interface circuit is configured to: receive the computer-executable instructions and transmit the computer-executable instructions to the processor.

28. A computer program product, wherein the computer program product is used by a computer to perform the channel state information reporting method according to any one of claims 1 to 11 or the channel state information reporting method according to any one of claims 12 to 23.

29. A communication apparatus, comprising at least one processor and a memory, wherein
the memory is configured to store a computer program; and
the processor is configured to execute a computer program stored in the memory, so that the communication apparatus performs the communication method according to any one of claims 1 to 11 or the communication method according to any one of claims 12 to 23.

30. A communication system, wherein the communication system comprises at least a first device, a second device, and a third device, the first device is configured to perform the method according to any one of claims 1 and 3 to 11, the second device is configured to perform the method according to any one of claims 12 and 14 to 23, and the third device is configured to perform the method according to any one of claims 2 to 11; or
the communication system comprises at least a second device and a third device, the second device is configured to perform the method according to any one of claims 1 and 3 to 11, and the second device is configured to perform the method according to any one of claims 2 to 11; or
the communication system comprises at least a second device and a fourth device, the second device is configured to perform the method according to any one of claims 12 and 14 to 23, and the fourth device is configured to perform the method according to any one of claims 13 to 23.
